(19) Europäisches Patentamt
European Patent Office
Office européen des brevets

(11) Publication number: **0 083 978**
**B1**

(12) # EUROPEAN PATENT SPECIFICATION

(45) Date of publication of patent specification: **08.01.86**

(51) Int. Cl.⁴: **C 09 J 3/14,** C 08 L 33/06, C 08 L 101/08, C 08 K 5/09

(21) Application number: **83300076.3**

(22) Date of filing: **07.01.83**

(54) **Polymer compositions and their use in or as adhesive and other compositions.**

(30) Priority: **13.01.82 US 339202**
**18.02.82 US 349725**

(43) Date of publication of application:
**20.07.83 Bulletin 83/29**

(45) Publication of the grant of the patent:
**08.01.86 Bulletin 86/02**

(84) Designated Contracting States:
**BE CH DE FR GB IT LI NL SE**

(56) References cited:
**US-A-3 740 366**

(73) Proprietor: **Rohm and Haas Company**
**Independence Mall West**
**Philadelphia, Pennsylvania 19105 (US)**

(72) Inventor: **Bartman, Benjamin**
**1010 Bell Lane**
**Maple Gen Pennsylvania 19002 (US)**

(74) Representative: **Angell, David Whilton et al**
**Rohm and Haas Company Patent Department**
**Chesterfield House Bloomsbury Way**
**London WC1A 2TP (GB)**

EP 0 083 978 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This application is concerned with polymer compositions and their use in or as adhesive and other compositions. As hot melt adhesives these compositions display low melt viscosity which simplifies their application, as well as attractive adhesive properties, especially shear resistance.

Hot melt pressure sensitive adhesives are tacky, soft materials at room temperature. In order to apply these materials to substrates such as paper, plastic, or cloth, these adhesives are usually heated to about 121—177°C (250—350°F) in order to lower their viscosity for easy coating of the substrate. The adhesive coated substrates may then be used as, or used in the manufacture of, a variety of useful articles such as tapes, labels and decals. A significant limitation on uses for which hot melt pressure sensitive adhesives may be employed is the relatively low shear resistance of these materials. Although these materials have been traditionally described as solids at room temperature, this description is not entirely accurate. These adhesives are usually based on primarily theromoplastic polymers. Thus, although they can exhibit very high viscosity at room temperature, giving the appearance of soft solids, they will flow under an applied stress.

Thus they are more accurately described as high viscosity polymeric liquids at room temperature. This nature is reflected in the effect of changing temperature on the viscosity of these materials. As temperature increases there is a gradual reduction of viscosity and the materials ultimately attain a viscosity low enough to make coating operations practical. After application, a temperature decline is reflected in the corresponding increase in the viscosity of the material. An ideal hot melt, pressure sensitive, adhesive would exhibit the mechanical properties of a true solid at room temperature while simultaneously retaining the ability to flow easily at the elevated application temperature. Although thermosetting materials, as a class, have proven impractical for this application, ideally, the pressure sensitive, hot melt, adhesive would behave as a crosslinked thermoset resin at room temperature: the application of shear stress would result merely in deformation and not in flow of the adhesive. Thus the viscosity of the ideal material would change from essentially infinite at room temperature to very low at the application temperature. Thus, the magnitude of this viscosity difference can to some extent be regarded as a measure of the quality of the hot melt adhesive.

One approach that has been used in the past to maximize this viscosity difference has been the incorporation of small amounts of functional monomers in the adhesive polymer coupled with the use of additional components to help form thermally reversible crosslinks between the polymer chains. For example, US—A 3,925,282, discloses acrylic, pressure sensitive, not melt, adhesive compositions which contain a tertiary amine-containing monomer in the acrylic copolymer. In addition to the copolymer, these compositions contain an organo-metallic salt which is capable of forming reversible coordinate crosslinks. At room temperature the presence of these crosslinks causes the hot melt adhesives to exhibit improved cohesive strength properties and increased shear resistance corresponding to higher vicosity relative to the uncrosslinked material. However, at high temperature the crosslinks are broken and the material flows easily. Another known type of reversible crosslinking for pressure sensitive adhesives is effected when these compositions include a divalent metal ion such as zinc or zirconium and carboxylic acid residues attached to the polymer chain, as disclosed, for example, in US—A 4,145,467.

Another approach has been to include photo initiators in the hot melt composition which can be photopolymerized *in situ* after application of the adhesive to the substrate. This approach is exemplified by US—A 4,052,527, in which photoinitiators are interpolymerized with acrylic copolymers to produce ethylenically unsaturated prepolymers. These are applied in hot melt form to the substrate and are subsequently cured by exposure to ultraviolet radiation. This approach suffers from the drawbacks of requiring: 1) expensive photoinitiators, 2) ultraviolet sensitivity prior to cure, and 3) an additional cure step requiring additional process equipment.

A review of the state of the hot melt adhesive art is presented by the materials collected by D. L. Bateman in *Hot Melt Adhesives* (Noyes Data Corp., Third Edition, 1978).

We have now found certain compositions which can be used to provide hot melt, pressure sensitive, adhesive compositions of attractive viscosity-temperature profile, often with attractive room temperature shear resistance and a good balance of other important adhesive properties. Acrylic hot melt, pressure sensitive, ionomeric adhesive compositions can be made according to the invention with particularly attractive room temperature shear resistance and these may also exhibit especially attractive low viscosity at elevated application temperatures. Ionomer compositions may also be provided, according to this invention, which exhibit improved viscosity sensitivity to temperature so that they are useful as coatings or sealants. The invention also can be used to provide an attractive tackifying resin composition for styrenebutadiene and styrene-isoprene block copolymer adhesive compositions.

Accordingly this invention comprises compositions comprising (a) organic polymer containing on average at least one carboxylic group per polymer molecule; (b) a source of metal ions said source being miscible with polymer (a) and present in an amount of at least 0.001 moles per mole of polymer (a) and (c) o-methoxy aryl acid and/or o-methoxy aryl acid anion; with the proviso that component (c) is optional if component (b) comprises a metal salt of o-methoxy aryl acid.

As used in the description hereinafter, the term "o-methoxy aryl acid" is used to denote both the free acid and the corresponding acid anion.

The compositions of the invention may be employed in many applications where it is desirable that the viscosity depends strongly on temperature; for example, these compositions as or in temperature dependent transmission fluids, encapsulating and potting compositions for electrical and electronic components and devices, caulking and sealant compositions, laminating adhesives, and coatings for wood, paper, metal, plastics, glass and other materials. The low-high temperature viscosity of the invention facilitates coating, application or fabrication at elevated temperatures, while the elevated viscosity at low temperature is reflected in other improved physical properties.

The accompanying drawing illustrates the reciprocal temperature dependence of the viscosity of ionomeric adhesive compositions described in Examples 2, 4 and 5 below. These describe a zinc ionomer adhesive composition control, a zinc ionomer containing p-methoxybenzoic acid and a zinc ionomer adhesive composition containing o-methoxybenzoic acid respectively. The remarkable and unexpected improvement in this property demonstrated by the latter composition is readily apparent.

The polymer (a) is preferably present in an amount of at least 50% by weight of (a) plus (b) plus (c). The source of metal ions may be, for example any metal salt compound or chelate capable of increasing polymer viscosity through the carboxylic acid residues of the polymer, and may indeed be a metal salt of o-methoxy aryl acid so fulfilling the requirement for both components (b) and (c).

Many different organic polymers are useful in the compositions of this invention: acrylic, styrenebutadiene, butylene, ethylene-acrylic, ethylene-vinyl acetate and propylene-higher olefin polymers may be used, as well as polyester, butene, isobutylene, isoprene and propylene polymers. Homopolymers, random copolymers, block copolymers, graft copolymers, and interpenetrating polymer networks can for example be used as can, for example solutions and physical mixtures of polymers. The polymers may be prepared from ethylenically unsaturated monomers such as ethylene, propylene, vinyl chloride, vinyl fluoride, vinylidene chloride, 1,4-hexadiene, isobutylene, isoprene, chloroprene, styrene, vinyl acetate, acrylonitrile, vinyl alcohol, butyl acrylate, butyl methacrylate, butadiene, and 2-ethylhexyl acrylate by free-radical polymerization. It is well known in the art that polyolefin components of hot melt adhesive compositions may be partially grafted with acid monomers such as acrylic acids to increase the adhesive bonding of the hot melt compositions to nonporous metallic surfaces. See, e.g., US—A 3,987,122 and US—A 3,868,433. Acid-grafted polyolefins may also be employed in the compositions of this invention. Condensation polymers such as polyesters may also be used.

The useful copolymers are preferably prepared by the bulk or solution polymerization of acrylic and/or methacrylic acid esters having up to 18 carbon atoms although minor amounts of other ethylenically unsaturated monomers may also be included. Preferred polymers of alkyl methacrylates and/or acrylates have an average of from one to about 18 carbon atoms in the alkyl groups, and include polymers of methyl methacrylate, ethyl acrylate, butyl acrylate, butyl methacrylate, n-hexyl acrylate, heptyl acrylate, octyl methacrylate, nonyl acrylate, decyl acrylate, and/or the various isomers of these acrylates and methacrylates such as iso-octylacrylate. One specific preferred alkyl acrylate for use in this invention is 2-ethylhexyl acrylate. Higher alkyl acrylates and methacrylates, such as dicyclopentyloxyalkyl acrylates and methacrylates, can be used, particularly in combination with lower acrylates and methacrylates. The useful polymers, whatever the exact nature of their ionomeric compositions, must contain on the average, at least one carboxylic acid bearing residue per polymer molecule. However, 0.5—4% by weight of acidic residue is preferred. Suitable acid units include units of acrylic, methacrylic, acryloxypropionic, itaconic, maleic, fumaric and/or citraconic acid. Non-acid bearing polymers may, however, also be included as a further component of compositions of the invention as, for example, tackifying agents in adhesive compositions. If tackifying polymers are not used in adhesive compositions of the invention, the monomer composition of polymer (a) must be selected so that the polymer is tacky at the temperature at which the composition is to be used.

As is known in the art, the glass transition temperature ($T_g$) of polymers used to prepare a pressure sensitive hot melt adhesive must be below 0°C in order for those polymers and therefore the composition to exhibit tack at room temperature. The glass transition temperature is a conventional criterion of polymer hardness and is described by Flory, *Principles of Polymer Chemistry,* (Cornell University Press, 1953) at 56—57. The $T_g$ of a copolymer of any specific composition can be approximately calculated from the $T_g$'s of the corresponding homopolymer, and from glass transition temperature factor tables well known to the polymer chemist, only the normal skill and knowledge of such a chemist being required to predict the $T_g$ of a given polymer and to select monomers to achieve a polymer of desired $T_g$; Fox, *Bull. Am. Physics Soc.,* 1,3 at 123 (1956). Consequently, the composition of the copolymer must be selected to give a $T_g$ below 0°C in order for the composition to be useful as a pressure sensitive adhesive if no tackifying polymer is included in the composition. The preferred monomers can be blended to give the desired $T_g$ of the copolymer. For example, a larger proportion (e.g., 58% by weight) of methyl methacrylate ($T_g$ = 105°C) with a smaller proportion (e.g., 42%) of n-octyl acrylate ($T_g$ = −80°C) provides a copolymer having the desired $T_g$. Most of the esters of acrylic acid and methacrylic acid having a low $T_g$ are well known in the pressure sensitive adhesive art as monomers which confer tack on the polymers containing them.

Other ethylenically unsaturated copolymerizable monomers which in themselves would give a polymer having a $T_g$ of above 0°C may be used in combination with the above-mentioned tackifying monomers, provided they do not adversely affect the desired properties of the adhesive (e.g., unduly raise the overall $T_g$) and do not seriously interfere with the viscosity change effected by the metal salt. These

include vinyl acetate, styrene, vinyl toluene, methacrylamide, and N-methylolacrylamide. In such cases the proportions of the monomers will generally fall within the following ranges:

| | Approximate Parts by Weight | | |
|---|---|---|---|
| Monomer | Useful Range | Preferred Range | Most Preferred Range |
| Tackifying monomer | 10—99.95 | 50—99.7 | 70—99.5 |
| Unsaturated carboxylic acid monomer | 0.95—20 | 0.3—10 | 0.5—6.0 |
| Other monomers | 0—89.95 | 0—49.7 | 0—29.5 |

Total of the monomers is 100 parts. These ranges, however, should not be construed as the only useful specification because the most important criteria are the glass transition temperature of the polymer and the proportion of carboxylic acid containing residues in the polymer.

If the composition is to be used for a laminating adhesive, it need not exhibit tack at room temperature and the polymer may have a higher $T_g$ as a result of the choice of the monomer composition. For example, a polymer having approximately the same $T_g$ as a homopolymer of butyl methacrylate (+50°C) is useful in a laminating adhesive composition. Similarly, in other applications, such as electronic materials encapsulation and potting media, the polymer should have a relatively high $T_g$ (e.g. ~ 100—200°C) and the monomer composition must be adjusted accordingly.

Suitable polymers can be prepared using free radical-initiated polymerization procedures. These random polymers may be produced by solution, bulk or emulsion polymerization procedures. If the polymerization is carried out in the presence of solvent or water, the solvent or water can be stripped from the polymer before using the polymer as an adhesive. The polymers are preferably prepared by solution polymerization. Before the solvent is stripped however, the relatively low viscosity of the solution can be taken advantage of in adding the components (b) and, if appropriate (c) of the composition to the copolymer in order to effect a rapid and easy dissolution of these materials in the polymer solution. Although no additives are generally required, the following may be employed in the composition of this invention: Organic solvents such as toluene, xylene, acetone, methylethyl ketone, methylisobutyl ketone, halogenated hydrocarbons such as chloroform and dichloroethane; tackifying agents, such as phenol resins, natural resins, coumarone-indene resins, rosin ester and hydrogenated rosin derivatives. Also fillers and pigments may be added to obtain needed properties. Typical fillers include: powdered quartz, barium sulfate, gypsum and calcium carbonate. Antioxidants, ultraviolet inhibitors, plasticizers and pigments may also be employed.

The source of metal ions may be a metal salt, or compound including metal complexes and chelates. The extent of ionic character of the bonding between the metal atom and the remainder of the source is not important since the source may be either a simple ionic compound or a metal complex or a metal chelate, as long as it is at least partially ionizable or soluble in the system. Suitable metal salts include salts of o-methoxy aryl acids e.g. zinc o-methoxybenzoate, which may be used to fulfil the requirements of both components (b) and (c) in the system. Miscibility may be determined by adding the source to the composition and testing a $2.54 \times 10^{-5}$m (1 mil) film thereof for transparency, an otherwise transparent thin film (~ 1 mil) still appearing translucent if the source is miscible. Suitable metals are selected from groups: IA, IB, IIA, IIB, IIIB, IVB, VB, VIB, VIIB, VIII, IIIA, IVA, VA, and VIA of the periodic table (Merck Index, 9th Edition, inside front cover). Preferably, the metals include: sodium, potassium, lithium, copper, gallium, tin, cerium, titanium, vanadium, chromium, molybdenum, manganese, iron, cobalt, nickel, berillium, cadmium, calcium, magnesium, zinc, zircronium, barium, strontium, aluminum, bismuth, antimony, lead, or any other such metal which can be added to the composition by means of an oxide, hydroxide, or basic, acidic, or neutral salt or other compound or complex which is miscible with the polymer and which can release metal ions, for example by dissociation in the composition. Zinc and zirconium compounds are preferred. The selection of metal and the anion are governed by the miscibility of the resultant metal complex or compound with the polymer medium employed and the availability of the metal ions in the composition. Examples of the organic and inorganic metal salts and compounds include: carboxylic acid salts and chelates, such as zinc acetate, zinc o-anisate, manganese tartrate, manganese benzoate, magnesium citrate, ferrous acetate, iron lactate, nickel acetate, cobalt acetate, cobalt benzoate, cobalt propionate, chelates or complexes which involve coordinate bonding and may be partially ionizable such as the zinc chelate of alanine or glycine, calcium chloride, aluminum diacetate, magnesium acetate, calcium carbonate, zirconium acetate, calcium acetate, calcium hydroxide, barium acetate, magnesium chloride, magnesium sulfate, ammonium complexes such as zinc ammonium benzoate, zinc ammonium carbonate and zinc ammonium sulfate. Any sulfur chelate having both ionic and coordination bonding in which the metal is sufficiently available or dissociable to bind to the carboxylic acid groups of polymer is

useful. Polyvalent metal complexes (salts) of organic acids that are capable of miscibility with or in the medium may also be employed. Such anions as acetate, glutamate, formate, carbonate, silicate, glycoate, octoate, benzoate, gluconate, oxylate, o-methoxy aryl carboxylate and lactate are satisfactory. Source of metal ions must be such that the metal is available to serve its viscosity increasing function; that is, it is attracted to the carboxyl groups by an equivalent mechanism. It is not intended that the invention be limited by theories or hypotheses concerning the mechanism "Crosslinking" or "viscosity increase" can both be used to describe any of the possible phenomena or mechanisms by which the metal modifies the viscosity of the invention. The most preferred components (b) include zinc octate, zirconium octoate, zinc o-methoxybenzoate and zinc 3-methoxy-2-naphthenoate.

The source of metal ions is preferably employed in such an amount so that the ratio of metal ions to the carboxyl groups of the polymer is at least 0.01 more preferably .01 to 2.0 and most preferably from .05 to 1.5. This is expressed on an equivalency basis as the ratio of metal (such as $Zn^{++}$) to polymer acid ($-COOH$ groups) a ratio of 0.5 being stoichiometric, for divalent metal ions.

The o-methoxy aryl acid may be a monomeric or polymeric organic compound which contains at least one o-methoxy aryl acid group, that is to say a methoxy group and a carboxylic acid group bonded to adjacent carbon atoms which form a portion of an aromatic ring system, such that a carbon atom adjacent to the methoxy substituted carbon of the o-methoxy aryl acid functional group does not form a part of more than one aromatic ring and such that a carbon atom adjacent to either carbon atom of the o-methoxy aryl acid group is not substituted with an alkoxy group.

Examples of suitable aromatic rings systems are benzene, toluene, xylene, biphenyl, biphenylene, naphthalene, azulene, anthracene, phenanthracene, pyridine, aniline, pyrrole, furan, thiophene, indole, benzofuran, benzothiophene, quinoline, isoquinoline, carbazole, imidazole, acridine, thiazole, pyrazine, pyrimidine, pteridine, oxazole, isoxazole, pyridazine, azepine, benzothiozole, difuropyrazine, benzoquinoline and coumarin rings.

Preferably, the o-methoxy-aryl acid is

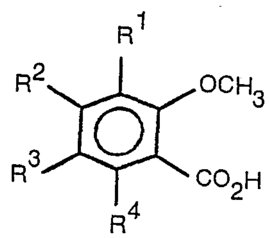

or

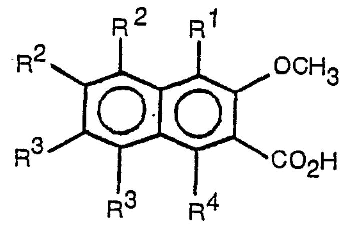

(1)

where $R^1$, $R^2$, $R^3$ and $R^4$ may be the same or different and may be hydrogen, halogen, nitro, cyano, amino, $(C_1-C_8)$alkyl, $(C_1-C_8)$alkoxy, $(C_2-C_8)$alkenyl, $(C_5-C_8)$cycloalkyl, $(C_5-C_8)$cycloalkenyl, $(C_5-C_8)$cycloalkynyl, $(C_2-C_8)$alkynyl, $(C_1-C_4)$alkyloxy$(C_1-C_4)$alkyl, phenyl or phenyl $(C_1-C_4)$alkyl optionally substituted with up to three of the following substituents on the phenyl ring: $(C_1-C_4)$alkyl, $(C_2-C_4)$alkenyl, $(C_2-C_4)$alkynyl, $(C_1-C_4)$alkoxy, halogen, nitro, or cyano or $(C_1-C_4)$alkyloxy $(C_1-C_4)$alkyl;

Provided that neither $R^1$ nor $R^4$ is $(C_1-C_8)$alkoxy, provided further that $R^1$ and $R^4$ may, taken together, form a $(C_4-C_8)$alkyl, $(C_5-C_8)$alkenyl, $(C_2-C_4)$alkoxy$(C_2-C_4)$alkyl, or $(C_5-C_8)$alkynyl chain.

More preferably, $R^1$, $R^2$, $R^3$ and $R^4$ are the same or different and are hydrogen, $(C_1-C_4)$alkyl, $(C_2-C_4)$alkenyl, $(C_2-C_4)$alkynyl, $(C_1-C_4)$alkoxy, halogen, or phenyl, benzyl, or phenethyl where the phenyl ring may be unsubstituted or be substituted with up to two of the following substituents: $(C_1-C_3)$alkyl, and halogen, provided that neither $R^1$ nor $R^4$ is $(C_1-C_4)$alkoxy.

Still more preferably $R^1$, $R^2$, $R^3$ and $R^4$ are the same or different and are hydrogen, methoxy, or chlorine, provided that neither $R^1$ nor $R^4$ is methoxy.

Most preferably, the o-methoxy aryl acid is 2-methoxybenzoic acid, 2,4-dimethoxybenzoic acid, 4-chloro-2-methoxybenzoic acid, or 3-methoxy-2-naphthenoic acid.

The o-methoxy aryl acid may be added to the composition in the form of a metal salt anion in which case it may act as the source of metal ions. The metal cation may be any of those given above. In this form the metal salt can be a salt of a monomeric or polymeric organic compound which contains at least one o-methoxy aryl acid anion functional group, defined to be a methoxy group and a carboxylate anion bonded to adjacent carbon atoms which form a portion of an aromatic ring system, such that a carbon atom adjacent to the methoxy substituted carbon of the o-methoxy aryl acid functional group does not form a part of more than one aromatic ring and such that a carbon atom adjacent to either carbon atom of the o-methoxy aryl acid group is not substituted with an alkoxy group.

Preferably, the o-methoxy aryl acid form of the metal salt is

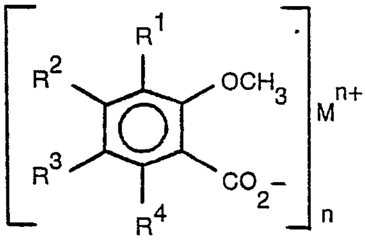

or

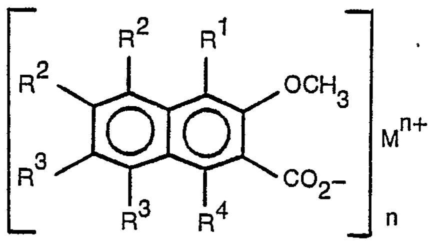

(II)

where n = 1, 2, or 3; and where $R^1$, $R^2$, $R^3$ and $R^4$ are as defined above, $(C_2—C_4)$alkoxy$(C_2—C_4)$alkyl, or $(C_5—C_8)$alkynyl chain and $M^{n+}$ is a metal ion, preferably $Na^+$, $K^+$, $Cu^{2+}$, $Fe^{2+}$, $Fe^{3+}$, $Co^{3+}$, $Ni^{2+}$, $Cd^{2+}$, $Ca^{2+}$, $Mg^{2+}$, $Zn^{2+}$, $Zr^{2+}$, $Ba^{2+}$, $Bi^{2+}$ and/or $Pb^{2+}$.

More preferably, the o-methoxy aryl acid form of the metal salt is given by Formula II above, where $R^1$, $R^2$, $R^3$ and $R^4$ are as preferred above. Preferably n is 1 or 2. Preferably $M^{n+}$ is $Na^+$, $K^+$, $Ni^{2+}$, $Ca^{2+}$, $Mg^{2+}$, $Zn^{2+}$, $Zr^{2+}$, $Ba^{2+}$, and/or $Co^{3+}$.

Still more preferably, the o-methoxy aryl acid form of the metal salt is given by Formula II above, where $R^1$, $R^2$, $R^3$ and $R^4$ are as more preferred above. More preferably n is 1 or 2. More preferably $M^{n+}$ is $Na^+$, $K^+$, $Ca^{2+}$, $Mg^{2+}$, $Zn^{2+}$, $Zr^{2+}$.

Most preferably, the o-methoxy aryl acid form of the metal salt is zinc 2-methoxybenzoate, zinc 2,4-dimethoxybenzoate, zinc-4-chloro-2-methoxybenzoate, or zinc 3-methoxy-2-naphthenoate.

The composition preferably contains 0.001 to 20%, by weight of the polymer, of the o-methoxy aryl acid, more preferably, 0.05 to 10%, most preferably, 0.5 to 4%, as the free acid or as the anion of a metal salt.

It will be clear therefore that the o-methoxy aryl acid may be added wholly or in part as metal salt component(b) so that the free acid is obligatory when a different source of metal ions is used and optional, depending on the amounts, when a metal salt of the o-methoxy aryl acid is used as component(b).

The preparation of the acrylate and other polymers of this invention is well known to the art of synthetic polymer synthesis. See, generally, W. R. Sorenson and T. W. Campbell, *Preparative Methods of Polymer Chemistry* (Interscience Publishers, Inc., N.Y. 1961), 149—234 (Addition Polymerization from Unsaturated Monomers) and especially 179—180 (Polymerization of Methyl Acrylate); C.E. Schildknecht, *Vinyl and Related Polymers* (John Wiley & Sons, Inc., N.Y. 1952), 220—224 (solution polymerization of methyl methacrylate); *Copolymerization* (G.E. Ham, ed., Interscience Publishers, N.Y.), Ch. XII, "Copolymerizations Involving Acrylates and Methacrylates as Principle Components", 673—674. Polymerization of the monomers can be effected in solution or in bulk, using free radical, cationic or anionic initiation, as is well known in the art.

In the light of and notwithstanding the above teaching we have found the following to be among the preferred compositions according to the invention:

A. Compositions containing

(a) at least 60% by weight of organic polymer containing, on average, at least one carboxylic acid group per polymer molecule,

(b) miscible metal salt in a ratio of from 1:100 to 10:1 total moles of metal salt to moles of polymer (a) carboxylic acid, and

(c) 0.10% to 10%, by weight of polymer, of o-methoxy aryl acid.

B. Compositions as defined in A containing

(a) at least 80% by weight of the organic polymer,

(b) the miscible metal salt in a ratio of 1:5 to 5:1 total moles of metal salt to moles of polymer (a) carboxylic acid, and

(c) 0.5% to 5%, by weight of polymer, of the o-methoxy aryl acid.

C. Compositions containing

(a) at least 60% by weight of organic polymer comprising at least 60% by weight of units, of $(C_1—C_{18})$alkyl ester(s) of acrylic and/or methacrylic acid, and containing 0.1 to 10% by weight of carboxylic acid-bearing units;

(b) a miscible salt of a metal from Groups IA, IIA, IB, IIB, IIIB, IVB, VB, VIB, or VIII of the periodic table in a ratio of from 1:100 to 10:1 total moles of metal salt to moles of polymer carboxylic acid, and

(c) 0.10% to 10%, by weight of polymer, of o-methoxy aryl acid.

D. Compositions as defined in C containing

(a) at least 80% by weight of the organic polymer comprising at least 80% by weight of the defined units,

(b) a miscible salt of a metal from Groups IA, IIA, IIB, IB, IVB, VIB, VIIB or VIII of the periodic table in a ratio of from 1:10 to 10:1 total moles of metal salt to moles of polymer carboxylic acid, and

E. Compositions as defined in D containing

(a) the organic polymer containing 0.5 to 5% by weight of the carboxylic acid-bearing units; and

(b) the miscible metal salt in a ratio of from 1:5 to 5:1 total moles of metal salt to moles of polymer (a) carboxylic acid.

F. Compositions containing

(a) at least 50% by weight of organic polymer comprising at least 80% by weight units of $(C_1—C_{18})$alkyl ester(s) of acrylic and/or methacrylic acids monomer(s) the polymer containing 0.1 to 10% by weight of carboxylic acid-bearing units such that the glass transition, temperature of the polymer is less than 5°C,

(b) a miscible salt of a metal from Groups IA, IIA, IB, IIB, IVB, VIB, VIIB or VIII of the periodic table in a ratio of from 1:10 to 10:1 total moles of metal salt per mole of polymer carboxylic acid, and

(c) 0.10% to 10%, by weight of polymer, of an o-methoxy aryl acid.

G. Composition containing

(a) organic polymer containing at least 60% by weight of units of $(C_1—C_{18})$alkyl ester(s) of acrylic and/or methacrylic acid(s) and containing on the average at least one carboxylic acid group per polymer molecule.

(b) a miscible salt of a metal from Groups IA, IIA, IB, IIB, IVB, VIB, VIIB or VIII of the periodic table in a ratio of from 1:10 to 10:1 total moles of metal salt per mole of polymer carboxylic acid, and

(c) 0.10% to 10%, by weight of polymer, of o-methoxy aryl acid of the formula

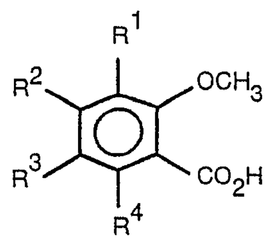

or

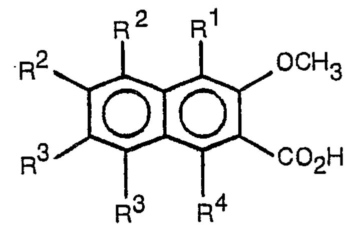

where $R^1$, $R^2$, $R^3$ and $R^4$ are the same or different and may be hydrogen, halogen, nitro, cyano, amino, $(C_1—C_4)$alkyl, $(C_1—C_4)$alkoxy, $(C_2—C_4)$alkenyl, $(C_5—C_8)$cycloalkyl, $(C_5—C_8)$cycloalkenyl, $(C_5—C_8)$cycloalkynyl, phenyl or phenyl-$(C_1—C_4)$alkyl, optionally substituted with up to three substituents in the phenyl ring selected from the group consisting of $(C_1—C_4)$alkyl, $(C_2—C_4)$alkenyl, $(C_2—C_4)$alkynyl, $(C_1—C_4)$alkoxy, halogen, nitro, or $(C_1—C_4)$alkyloxy-$(C_1—C_4)$alkyl; provided that neither $R^1$ nor $R^4$ is $(C_1—C_4)$alkoxy; provided further that $R^1$ and $R^4$ may, taken together, form a $(C_4—C_8)$alkyl, $(C_5—C_8)$alkynyl, or $(C_2—C_4)$alkoxy$(C_2—C_4)$alkyl chain.

H. Compositions as defined in G wherein the substituents, $R^1$, $R^2$, $R^3$ and $R^4$ of the o-methoxy aryl acid are independently hydrogen, $(C_1—C_4)$alkyl, $(C_2—C_4)$alkenyl, $(C_2—C_4)$alkynyl, $(C_1—C_4)$alkoxy, halogen, phenyl, benzyl or phenethyl, where the phenyl ring is substituted with up to two substituents selected from the group consisting of $(C_1—C_3)$alkyl, and halogen; provided that neither $R^1$ nor $R^4$ is $(C_1—C_4)$alkoxy.

I. Compositions as defined in H wherein the substituents $R^1$, $R^2$, $R^3$ and $R^4$ of the o-methoxy aryl acid are independently hydrogen, methoxy or chlorine, provided that neither $R^1$ nor $R^4$ is methoxy.

J. Compositions as defined in I wherein the o-methoxy aryl acid is 2-methoxybenzoic acid, 2,4-dimethoxybenzoic acid, 4-chloro-2-methoxybenzoic acid, or 3-methoxy-2-naphthenoic acid.

K. Compositions containing

(a) at least 50% by weight of organic polymer containing at least 80% by weight of units of $(C_1—C_{18})$alkyl ester(s) of acrylic and/or methacrylic acid(s) and containing on the average at least one carboxylic acid group per polymer molecule,

(b) a miscible salt of zinc, zirconium and/or cadmium, in a ratio of from 1:10 to 10:1 total moles of metal salt per mole of polymer carboxylic acid, and

(c) 0.10% to 10%, by weight of polymer, of o-methoxy aryl acid of the formula

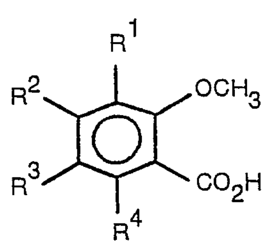

or

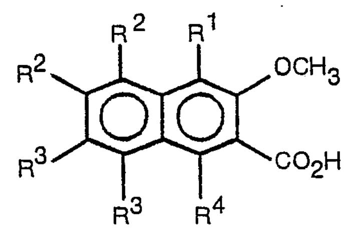

where $R^1$, $R^2$, $R^3$ and $R^4$ are independently hydrogen, halogen, nitro, cyano, amino, $(C_1—C_8)$alkyl, $(C_1—C_8)$alkoxy, $(C_2—C_8)$alkenyl, $(C_5—C_8)$cycloalkyl, $(C_5—C_8)$cycloalkenyl, $(C_5—C_8)$cycloalkynyl, phenyl or phenyl-$(C_1—C_4)$alkyl, optionally substituted with up to three substituents on the phenyl ring selected from the group consisting of $(C_1—C_4)$alkyl, $(C_2—C_4)$alkenyl, $(C_2—C_4)$alkynyl, $(C_1—C_4)$alkoxy, halogen, nitro or $(C_1—C_4)$alkyloxy$(C_1—C_4)$alkyl; provided that neither $R^1$ and $R^4$ is $(C_1—C_8)$alkoxy; provided further that $R^1$ and $R^4$ may, taken together, form a $(C_4—C_8)$alkyl, $(C_5—C_8)$alkenyl, $(C_5—C_8)$alkynyl, or $(C_2—C_4)$alkoxy$(C_2—C_4)$alkyl chain,

(d) optional fillers, extender pigments, tackifying agents, organic solvents, antioxidants, ultraviolet inhibitors, and/or plasticizers.

L. Compositions containing

(a) at least 80% by weight of organic polymer containing at least 80% by weight of units of $(C_1—C_{18})$alkyl ester(s) of acrylic and/or methacrylic acid(s) such that the glass transition temperature of the polymer is 0°C or less, containing on the average at least one carboxylic acid group per polymer molecule,

(b) a miscible salt of metallic zinc, cadmium, zirconium, copper, magnesium, calcium, sodium, potassium, manganese, nickel and/or cobalt in a ratio of from 1:5 to 5:1 total moles of metal salt per mole of polymer carboxylic acid,

(c) 0.10 to 10%, by weight of polymer, of o-methoxy-aryl acid of the formula

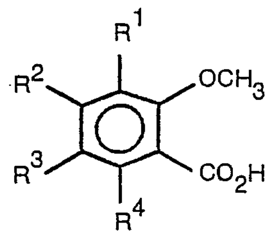

or

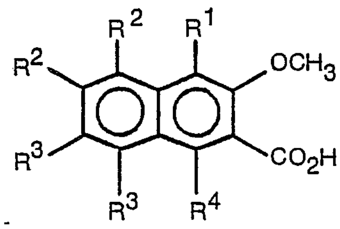

where $R^1$, $R^2$, $R^3$ and $R^4$ are independently hydrogen, $(C_1—C_4)$alkyl, $(C_2—C_4)$alkenyl, $(C_1—C_4)$alkoxy, halogen, or phenyl, benzyl or phenethyl where the phenyl ring is substituted with up to two substituents selected from the group consisting of halogen and $(C_1—C_3)$alkyl provided that neither $R^1$ nor $R^4$ is $(C_1—C_4)$alkoxy, and

(d) optional fillers, extender pigments, tackifying agents, organic solvents, antioxidants, ultraviolet inhibitors and/or plasticizers.

M. Compositions as defined in L containing

(a) at least 90% by weight of organic polymer containing butyl acrylate, butyl methacrylate, 2-ethylhexylacrylate, isodecyl methacrylate, acrylic acid, methacrylic acid and/or acryloxypropanoic acid units such that the polymer contains between 0.5% and 4% by weight of carboxylic acid residue,

(b) zinc octate, zinc naphthenate, cadmium octoate, and/or zirconium octoate, such that the ratio of metal to polymer acid groups is between 0.05 and 1.5 and between 0.5 and 4%, by weight of polymer.

(c) 2-methoxybenzoic acid, 2,4-dimethoxybenzoic acid, 4-chloro-2-methoxybenzoic acid and/or 3-methoxy-2-naphthenoic acid.

It will be appreciated that in these formulations, when the source of metal ions includes a metal salt of o-methoxy aryl acid this salt will be regarded as component(b) and the anions thereof as component(c) in the composition, as taught hereinbefore.

The following Examples are given, for the purposes of illustration only, to describe some embodiments of the invention.

## Example 1

Acrylic Polymer Preparation

A monomer solution was prepared from 1056 g of butyl acrylate, 238 g of butyl methacrylate, and 26.4 g of methacrylic acid. An initiator solution was prepared from 4.1 g of *t*-butyl peroctoate, 104 g of toluene and 26 g of acetone. To a flask equipped with a thermometer, a condenser surmounted with a nitrogen inlet, stirrer, and addition funnel was charged 100 g of toluene, 92 g of monomer solution and 9 g of initiator solution. The flask contents were kept under a nitrogen blanket and refluxed (117°C) for 15 minutes. The remainder of the monomer and initiator solutions were combined and fed into the refluxing flask contents over a one hour period. At the end of this feed, a charge of 2.5 g of *t*-butyl peroctoate and 35 g of toluene was made to decrease the level of unreacted monomers. The polymer solution was diluted to 50% solids with 1478 g of toluene and cooled. When concentrated to 100% solids, the polymer was found to have a viscosity of 8.4 Ns/m$^2$ (8400 cps) at 175°C. The product was denoted as polymer A.

In a similar manner the polymers of polymers B—J of Table 1 were prepared.

TABLE 1
Acrylic Solution Polymers

| Polymer | Monomer Composition (wt. percent) |
|---|---|
| A | 0.80 butyl acrylate/0.18 butyl methacrylate/ 0.02 methacrylic acid |
| B | 0.80 butyl acrylate/0.183 butyl methacrylte/0.017 acrylic acid |
| C | 0.80 butyl acrylate/0.166 butyl methacrylate/0.034 acryloxypropanoic acid |
| D | 0.99 butyl acrylate/0.01 methacrylic acid |
| E | 0.98 butyl acrylate/0.02 methacrylic acid |
| F | 0.97 butyl acrylate/0.03 methacrylic acid |
| G | 0.97 2-ethylhexyl acrylate/0.03 methacrylic acid |
| H | 0.98 isodecyl methacrylate/0.02 methacrylic acid |
| J | 0.68 isodecyl methacrylate/0.30 2-ethylhexyl methacrylate/0.02 methacrylate acid |

Example 2

Acrylic Ionomer Composition Preparation

To 750 g of the polymer solution prepared in Example 1 were added 130 g of ethanol, 9.94 g of o-methoxybenzoic acid, and 26.7 g of zinc octoate solution containing 8% zinc by weight. The resulting ionomer solution was mixed and concentrated to 100% solids. The viscosity at 175°C was 36 $Ns/m^2$ (36,000 cps).

Example 3

Ethylene-Acrylic Ionomer Composition Preparation

500 g of VAMAC (trademark of Du Pont de Nemours) VMR 5245 ethylene acrylic ionomer, an elastomer prepared from methyl methacrylate, ethylene, and carboxylic acid bearing monomers as well as a metal ion "crosslinker", is dissolved in 500 g of xylene. 20 g of o-methoxybenzoic acid is added with agitation to the polymer solution and the solution is stripped of solvent under vacuum to 80% solids. The resulting adhesive displays significantly better room temperature shear resistance than a comparable adhesive without the added o-methoxybenzoic acid.

Example 4

Viscosity-Temperature Characteristics of p-Methoxybenzoic Acid Adhesive Composition

The viscosity of polymer A above was found to be approximately 8 $Ns/m^2$ (8,000 cps) at 176.6°C (350°F). One equivalent of zinc octoate increased the viscosity to approximately 80 $Ns/m^2$ (80,000 cps). When one equivalent of p-methoxybenzoic acid was added to the polymer containing one equivalent of zinc ion, the viscosity was reduced to approximately 18 $Ns/m^2$ (18,000 cps). As illustrated in the Figure in which log viscosity is plotted versus reciprocal temperature, this viscosity reduction occurs over the entire temperature range from 93.3°C to 176.6°C (200 to 350°F).

However, if instead of p-methoxybenzoic acid, one equivalent of o-methoxybenzoic acid was added to the zinc containing polymer the temperature dependence of the viscosity had an entirely different character.

Example 5

Viscosity-Temperature Characteristics of o-Methoxybenzoic Acid Adhesive Composition

The temperature dependence of the viscosity of the composition of Example 2 had an entirely different character than that observed for the corresponding p-methoxybenzoic acid-containing composition of Example 4. As is illustrated in the Figure, a significant viscosity reduction, comparable to that obtained with the addition of the p-methoxybenzoic acid, was obtained at high temperature. On the other hand, when temperature was reduced the viscosity increased at a significantly greater rate than was expected on the basis of the behaviour of the polymer containing the zinc and the p-methoxybenzoic acid. In fact, the viscosity of the o-methoxybenzoic containing polymer matches and then exceeds that of the control which does not contain either methoxybenzoic acid.

Example 6

Adhesive Properties of Acrylic Ionomer Compositions

Table II details the results of testing the adhesive properties of the compositions based on polymer A described above.

Peel adhesion was measured in accord with the Pressure Sensitive Tape Council (PSTC) standard for "Peel Adhesion for Single Coated Tape 180° Angle," PSTC-1, revised 11/75. Shear resistance was measured in accord with PSTC-7, revised 11/75, "Shear Adhesion (holding power)." Test equipment used in these tests was in accord with PSTC Appendage B and the standard test conditions are in accord with PSTC Appendage A. Viscosity was measured with a Brookfield viscometer using an appropriate spindle. Rolling ball tack is measured in accord with PSTC-6.

Qualitative tack was a finger touch comparison executed by three or more individuals skilled in this art. The rating scale, from best to worst is: E (excellent), VG (very good), G (good), F (fair), P (poor) and 0 (none). Test specimens to be evaluated were compared with a standard consisting of 3M Scotch Magic Mending Tape which is assigned a rating of excellent.

Table II illustrates that although the peel strength of the additive free polymer A is significant 41.3 Kg/m (37 oz/in), the polymer exhibits no resistance to shear whatsover. The adhesive properties which characterize the polymer change when one equivalent of zinc ion has been added. Although the peel strength has been decreased somewhat to 16.74—20.1 Kg/m (15—18 oz/in), the material now exhibits significant shear resistance (24 hours). Adding an equivalent of p-methoxybenzoic acid to this system, in addition to the viscosity reduction illustrated in the Figure, effects a significant increase in peel strength to 64.7 Kg/m (58 oz/in). However, accompanying the reduction in viscosity, the shear resistance of the p-methoxy-benzoic acid containing system is reduced almost back to the level of the completely unmodified polymer (0.2 hours). On the other hand, although one effect of adding an equivalent of o-methoxybenzoic acid to the zinc-Polymer A system was a very significant reduction in the high temperature viscosity of the material, comparable to that obtained with the other methoxy aryl acid, p-methoxybenzoic acid, the shear resistance of the o-methoxybenzoic acid containing system shows a significant increase (greater than a 100 hours) in contrast to the almost complete loss of shear resistance to the p-methoxybenzoic acid containing system over Polymer A alone.

TABLE II

Adhesive Properties of Ionomer Compositions.

| Zinc Octoate (equivalents on polymer acid) | p-Methoxy benzoic acid (equivalents on polymer acid) | o-Methoxy benzoic acid (equivalents on polymer acid) | Viscosity at (350°F) 176.7°C $Ns/m^2$(cps) | Peel[a] Strength/ Failure Mode Kg/m(oz/in) | Shear[a] Resistance (hours) | Tack (qualitative) |
|---|---|---|---|---|---|---|
| 0 | 0 | 0 | 5–8 (5,000–8,000) | 41.3 (37) cohesive | 0 | $E^+$ |
| 1 | 0 | 0 | 80–100 (80,000–100,000) | 16.74 – 20.1 (15–18) adhesive | 24 | F–G |
| 1 | 1 | 0 | 18 (18,000) cohesive | 64.7 (58) cohesive | 0.2 | E |
| 1 | 0 | 1 | 18–25 (18,000–25,000) | 13.4 – 20.1 (12–18) adhesive | 100 | G–VG |

a. Room temperature, 50% relative humidity.

Example 7

Effect of Polymer Composition, Zinc Level and o-Methoxybenzoic Acid Level on Adhesive Properties

Table III details the effects of changes in the nature of the acidic monomer incorporated into the polymer, the level of zinc ion, and the level of o-methoxybenzoic acid on the adhesive properties of the system. The adhesive properties of three acrylic polymers (A-1, B-1 and C-1), each containing an equivalent molar amount of a different carboxylic acid-bearing monomer, were tested. A comparison indicates that the adhesive properties of these materials are essentially the same. Each exhibits excellent qualitative tack and substantial adhesive strength. The mode of failure is cohesive. Shear resistance, however, is non-existent.

Comparison of these data with those for adhesive compositions A-2, B-2, and C-2 illustrate the effect of adding a half equivalent of zinc ion to the system. The addition of zinc reduces the qualitative and rolling ball tack, but increases the 180° peel adhesion strength of each of the systems. In addition, each of the zinc-modified systems now exhibits some shear resistance.

In adhesive compositions A-3, B-3 and C-3, the level of added zinc ion is increased to a full equivalent on polymer acid. Again, the character of the change in adhesive properties is independent of the nature of the polymer acid employed. The qualitative and rolling ball tack both decrease and the shear resistance increases. Each of these changes are in qualitative accord with the differences in adhesive properties apparent after the initial addition of a half equivalent of zinc. However, the 180° peel adhesion strength has decreased and the character of failure has changed from cohesive to adhesive.

When a half equivalent of o-methoxybenzoic acid is added to the system containing one-half equivalent of zinc ion (Compositions A-2, B-2 and C-2) the resulting compositions, A-4, B-4 and C-4 show an increase in shear resistance while tack and peel adhesive strength properties are relatively unchanged. The increase in shear resistance is particularly significant for the methacrylic acid-containing system.

When a full equivalent of o-methoxybenzoic acid is added to those systems containing an equivalent of zinc ion (Compositions A-5, B-5 and C-5), a similarly significant increase in shear resistance is achieved; however, tack and peel strength of the systems containing the o-methoxy-benzoic acid appear to be slighly improved over those other systems which do not contain this additive.

Finally, Composition A-6 shows the effect of adding an equivalent of o-methoxybenzoic acid to the polymer A in the absence of zinc ion. No significant differences are observed.

TABLE III

Effects of Polymer Acid Type, $Zn^{++}$ Level and o-Methoxybenzoic Acid level on Adhesive Properties

| | Adhesive Composition | | Adhesive Properties | | | | |
|---|---|---|---|---|---|---|---|
| Polymer | Identification | $Zn^{++}$ Level (Equivalents on Polymer Acid) | o-Methoxybenzoic Acid Level (Equivalents on Polymer Acid) | 180° Peel Strength Kg/m(oz/in) | Shear Resistance (hours) | Rolling Ball Tack | Qualitative Tack |
| A | A–1 | 0 | 0 | 41.3 (37) C | 0 | 2.8 | E+ |
| | A–2 | 0.5 | 0 | 63.6 (57) C | 1.9 | 4.4 | VG+ |
| | A–3 | 1.0 | 0 | 12.3 (11) A | 24 | >7 | G |
| | A–4 | 0.5 | 0.5 | 61.4 (55) AFB[1] | 47 | 3.1 | E |
| | A–5 | 1.0 | 1.0 | 20.1 (18) A | >100 | 6 | G |
| | A–6 | 0 | 1.0 | 42.4 (38) C | 0 | 2.8 | E+ |
| B | B–1 | 0 | 0 | 32.4 (29) C | 0 | 2.0 | E+ |
| | B–2 | 0.5 | 0 | 61.4 (55) C | 0.7 | 3.1 | VG–E |
| | B–3 | 1.0 | 0 | 22.3 (20) A | 23 | >7 | F–G |
| | B–4 | 0.5 | 0.5 | 50.2 (45) A | 42 | 1.7 | E |
| | B–5 | 1.0 | 1.0 | 20.1 (18) A | >100 | 6.0 | G |
| C | C–1 | 0 | 0 | 29.0 (26) C | 0 | 1.0 | E+ |
| | C–2 | 0.5 | 0 | 58.0 (52) C | 0.1 | 3.9 | E |
| | C–3 | 1.0 | 0 | 21.2 (19) A | 0.9 | 5.6 | G |
| | C–4 | 0.5 | 0.5 | 59.1 (53) C | 0.2 | 7 | E |
| | C–5 | 1.0 | 1.0 | 31.3 (28) A | 1.8 | 2 | G–VG |

[1]AFB – Adhesive failure from backing.

Example 8

Preparation of Ethylene-Based Ionomer Composition

To 250 g of a copolymer of composition 85 parts by weight of ethylene, 5 parts by weight of acrylamide, 10 parts by weight of t-butyl acrylate and 5 parts by weight of methacrylic acid is added 6 g of zinc naphthenate and 10 g of 4-chloro-2-methoxybenzoic acid by coextrusion at 230°C.

Example 9

Preparation of Grafted Acid-Olefinic Polymer Based Ionomer Composition

To 250 g of isotactic polypropylene grafted with 6% acrylic acid and having a melt flow of 50 at 203°C as measured according to ASTM Method D-123-57T is added 5 g of zinc octoate and 10 g of o-methoxybenzoic acid. The resulting composition exhibits decreased viscosity at elevated temperature ~204°C (~400°F) while maintaining good peel adhesion at room temperature to aluminum foil in comparison with a control composition without the o-methoxybenzoic acid.

Example 10

Hot Melt Laminating Adhesive

In a manner similar to the preparation of polymer A of Example 1 above, a polymer of weight percent composition 0.98 n-butyl methacrylate and 0.02 methacrylic acid is prepared. The polymer is dissolved in toluene to form a 50% solids solution. To 500 g of this solution is added 15 g of zirconium octoate and 24 g of 3-methoxy-2-naphthenoic acid and 60 g of ethanol. The resulting ionomer solution is mixed and concentrated to 100% solids. The resulting composition is useful as a hot melt laminating adhesive.

Example 11

Preparation of Adhesive Composition Containing Zinc o-Methoxybenzoate

Zinc o-methoxybenzoate was prepared by mixing 32.6 g of zinc oxide with 138 g of o-methoxybenzoic acid and 600 g of water and refluxing for 4 hours. After cooling in an ice bath, the solid was filtered off and dried in a vacuum oven at 25 mm Hg and 50°C to yield 103 g of zinc o-methoxybenzoate. An elemental analysis gave 52.8% C, 3.95% H and 16.0% Zn (calculated: 52.26% C, 3.81% H and 17.8% Zn).

To 700 g of a 50% solids solution of polymer A in toluene was added 100 g of n-butanol and 12.13 g of zinc o-methoxybenzoate. After stirring and heating at 100°C for six hours, the resulting clear solution was concentrated on a rotary evaporator to a final temperature of 175°C and pressure of 25 mm Hg. The adhesive composition was found to have a viscosity of 25.5 $Ns/m^2$ (25,500 cps) at 176.7°C (350°F), a peel strength of 19 Kg/m (17 oz/in); a shear resistance of 23 hours; and a qualitative tack of E.

## Claims

1. A composition comprising:

(a) organic polymer containing, on average, at least one carboxylic group per polymer molecule;

(b) a source of metal ions, said source being miscible with polymer (a) and present in an amount of at least 0.001 moles per mole of polymer (a); and

(c) o-methoxy aryl acid and/or o-methoxy aryl acid anion; with the proviso that component (c) is optional if component (b) comprises a metal salt of o-methoxy aryl acid.

2. A composition as claimed in Claim 1 which contains o-methoxy aryl acid as component (c) or anions thereof in component (b) or a mixture of the two in a total amount of 0.001 to 20%, by weight of polymer (a) or 0.1 to 10%, more preferably 0.5 to 4%.

3. A composition as claimed in any preceding claim which contains at least 0.01 metal ions, or 0.01 to 2.0, or 0.05 to 1.5 metal ions per polymer (a) carboxyl group or an equivalency basis.

4. A composition as claimed in any preceding claim wherein polymer (a) contains 0.05 to 20%, or contains 0.5 to 4%, by weight of carboxylic acid-bearing monomer units.

5. A composition as claimed in any preceding claim containing at least 50% by weight, or at least 60% by weight or at least 80% by weight of polymer (a) based on total (a) plus (b) plus (c).

6. A composition as claimed in any preceding claim wherein the o-methoxy-aryl acid and/or o-methoxy aryl acid anion is present as

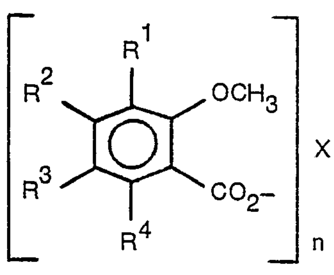

or

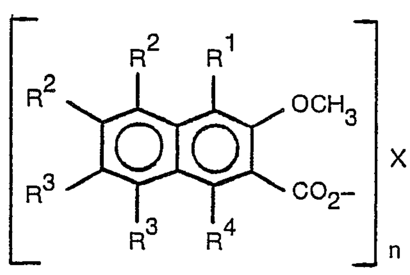

where X is H and/or $M^{n+}$, where M is a metal, and n is 1 when X is H or 1, 2 or 3 when X is $M^{n+}$ and where $R^1$,

$R^2$, $R^3$ and $R^4$ may be the same or different and may be hydrogen, halogen, nitro, cyano, amino, ($C_1$—$C_8$)alkyl, ($C_1$—$C_8$)alkoxy, ($C_2$—$C_8$)alkenyl, ($C_5$—$C_8$)cycloalkyl, ($C_5$—$C_8$)cycloalkenyl, ($C_5$—$C_8$)cycloalkynyl, ($C_2$—$C_8$)alkynyl, ($C_1$—$C_4$)alkyloxy($C_1$—$C_4$)alkyl, phenyl or phenyl($C_1$—$C_4$)alkyl, optionally substituted with up to three of the following substituents on the phenyl ring: ($C_1$—$C_4$)alkyl, ($C_2$—$C_4$)alkenyl, ($C_2$—$C_4$)alkynyl, ($C_1$—$C_4$)alkoxy, halogen, nitro or cyano, or ($C_1$—$C_4$)alkyloxy ($C_1$—$C_4$)alkyl; provided that neither $R^1$ nor $R^4$ is ($C_1$—$C_8$)alkoxy, provided further that $R^1$ and $R^4$ may, taken together, form a ($C_4$—$C_8$)alkyl, ($C_5$—$C_8$)alkenyl, ($C_2$—$C_4$)alkoxy($C_2$—$C_4$)alkyl, or ($C_5$—$C_8$)alkynyl chain.

7. A composition as claimed in Claim 6 wherein $R^1$, $R^2$, $R^3$ and $R^4$ are the same or different and are hydrogen, ($C_1$—$C_4$)alkyl, ($C_2$—$C_4$)alkenyl, ($C_2$—$C_4$)alkynyl, ($C_1$—$C_4$)alkoxy, halogen, or phenyl, benzyl or phenethyl where the phenyl ring may be unsubstituted or be substituted with up to two of the following substituents: ($C_1$—$C_3$)alkyl, and halogen, provided that neither $R^1$ nor $R^4$ is ($C_1$—$C_4$)alkoxy.

8. A composition as claimed in Claim 7 wherein $R^1$, $R^2$, $R^3$ and $R^4$ are the same or different and are independently hydrogen, methoxy or chlorine, provided that neither $R^1$ nor $R^4$ is methoxy.

9. A composition as claimed in Claim 8 wherein the o-methoxy aryl acid and/or o-methoxy aryl acid anion is present as 2,4-dimethoxybenzoic acid, 4-chloro-2-methoxybenzoic acid or 3-methoxy-2-naphthenoic acid and/or a metal salt thereof.

10. A composition as claimed in any preceding claim wherein the metal is one or more of the metals of groups: IA, IB, IIA, IIB, IIIB, IVB, VB, VIB, VIIB, VIII, IIIA, IVA, VA, and VIA of the periodic table (Merck Index 9th edition, inside front cover).

11. A composition as claimed in Claim 10 wherein the metal is: sodium, potassium, lithium, copper, gallium, tin, cerium, titanium, vanadium, chromium, molybdenum, manganese, iron, cobalt, nickel, berillium, cadmium, calcium, magnesium, zinc, zirconium, barium, strontium, aluminum, bismuth, antimony and/or lead.

12. A composition as claimed in any preceding claim wherein the polymer contains units from one or more ($C_1$—$C_{18}$)alkyl esters or acrylic or methacrylic acid.

13. A composition as claimed in any preceding Claim wherein the polymer has a glass transition temperature of less than 5°C or less than 0°C.

14. A composition as claimed in any preceding Claim wherein the polymer contains units of butyl acrylate, butyl methacrylate, 2-ethylhexyl acrylate, isodecyl methacrylate, acrylic acid, methacrylic acid, itaconic acid, maleic acid and/or acryloxypropanoic acid.

15. A composition comprising

(a) organic polymer containing at least one carboxylic acid group per polymer molecule.

(b) miscible metal salt in a ratio of at least $10^{-3}$ moles of metal salt to moles of polymer carboxylic acid,

(c) $10^{-2}$ to 20% by weight, based on organic polymer, of o-methoxy aryl acid and/or o-methoxy aryl acid anion.

16. A composition according to Claim 15 containing

(a) at least 60% by weight of organic polymer containing, on average, at least one carboxylic acid group per polymer molecule,

(b) miscible metal salt in a ratio of from 1:$10^2$ to 10:1 total moles of metal salt to moles of polymer carboxylic acid, and

(c) 0.10% to 10%, by weight of polymer, of o-methoxy aryl acid and/or o-methoxy aryl acid anion.

17. A composition according to Claim 16 containing

(a) at least 80% by weight of the organic polymer,

(b) the miscible metal salt in a ratio of 1:5 to 5:1 total moles of metal salt to moles of polymer (a) carboxylic acid, and

(c) 0.5% to 5%, by weight of polymer, of the o-methoxy aryl acid and/or o-methoxy aryl acid anion.

18. A composition according to Claim 15 containing

(a) at least 60% by weight of organic polymer comprising at least 60% by weight of units of ($C_1$—$C_{18}$)alkyl ester(s) of acrylic and/or methacrylic acid, containing 0.1 to 10% by weight of carboxylic acid-bearing units.

(b) a miscible salt of a metal from Groups IA, IIA, IB, IIB, IIIB, IVB, VB, VIB or VIII of the periodic table in a ratio of from 1:100 to 10:1 total moles of metal salt to moles of polymer carboxylic acid, and

(c) 0.10% to 10%, by weight of polymer (a) of O-methoxy aryl acid and/or o-methoxy aryl acid anion.

19. A composition according to Claim 18 containing

(a) at least 80% by weight of the organic polymer comprising at least 80% by weight of the defined units,

(b) a miscible salt of a metal from Groups IA, IIA, IIB, IB, IVB, VIB, VIIB or VIII of the periodic table.

20. A composition according to Claim 19 containing

(a) polymer containing 0.5 to 5% by weight of carboxylic acid-bearing monomer residues; and

(b) the metal salt in a ratio of from 1:5 to 5:1 total moles of metal salt to moles of polymer carboxylic acid.

21. A composition according to Claim 15 containing

(a) at least 50% by weight of organic polymer comprising at least 80% by weight units of ($C_1$—$C_{18}$)alkyl ester(s) of acrylic and/or methacrylic acid, the polymer containing 0.1 to 10% by weight of carboxylic acid-bearing monomer residues such that the glass transition temperature of the polymer is less than 5°C.

(b) a miscible salt of a metal from Groups IA, IIA, IB, IIB, IVB, VIB, VIIB or VIII of the periodic table in a ratio of from 1:10 to 10:1 total moles of metal salt per mole of polymer carboxylic acid, and .

(c) 0.10% to 10%, by weight of polymer, of o-methoxy aryl acid and/or o-methoxy aryl acid anion.

22. A composition according to Claim 15 containing

(a) organic polymer containing at least 60% by weight of units of ($C_1$—$C_{18}$)alkyl ester(s) of acrylic and/or methacrylic acid and containing, on the average, at least one carboxylic acid group per polymer molecule

(b) a miscible salt of a metal from Groups IA, IIA, IB, IIB, IVB, VIB, VIIB or VIII of the periodic table in a ratio of from 1:10 to 10:1 total moles of metal salt per mole of polymer carboxylic acid, and

(c) 0.10% to 10%, by weight of polymer, of o-methoxy aryl acid having the formula

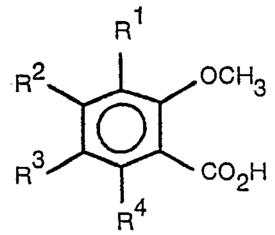

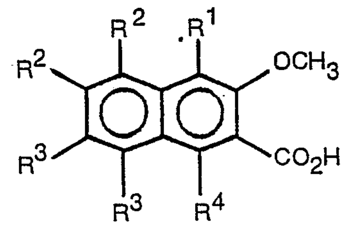

where $R^1$, $R^2$, $R^3$ and $R^4$ are the same or different and may be hydrogen, halogen, nitro, cyano, amino, ($C_1$—$C_4$)alkyl, ($C_1$—$C_4$)alkoxy, ($C_2$—$C_4$)alkenyl, ($C_5$—$C_8$)cycloalkyl, ($C_5$—$C_8$)cycloalkenyl, ($C_5$—$C_8$)cycloalkynyl, phenyl or phenyl-($C_1$—$C_4$)alkyl, optionally substituted with up to three substituents in the phenyl ring selected from the group consisting of ($C_1$—$C_4$)alkyl, ($C_2$—$C_4$)alkenyl, ($C_2$—$C_4$)alkynyl, ($C_1$—$C_4$)alkoxy, hydrogen, halogen, nitro, or ($C_1$—$C_4$)alkyloxy($C_1$—$C_4$)alkyl; provided that neither $R^1$ nor $R^4$ is ($C_1$—$C_8$)alkoxy; provided further that $R^1$ and $R^4$ may, taken together, form a ($C_4$—$C_8$)alkyl, ($C_5$—$C_8$)alkynyl, or ($C_2$—$C_4$)alkoxy($C_2$—$C_4$)alkyl chain.

23. A composition according to Claim 22 wherein the substituents $R^1$, $R^2$, $R^3$ and $R^4$ of the o-methoxy aryl acid are the same or different and are hydrogen, ($C_1$—$C_4$)alkyl, ($C_2$—$C_4$)alkenyl, ($C_2$—$C_4$)alkynyl, ($C_1$—$C_4$)alkoxy, halogen, phenyl, benzyl or phenethyl, where the phenyl ring is unsubstituted or substituted with up to two of the following substituents: ($C_1$—$C_3$)alkyl, and halogen; provided that neither $R^1$ nor $R^4$ is ($C_1$—$C_4$)alkoxy.

24. A composition according to Claim 23 wherein the substituents $R^1$, $R^2$, $R^3$ and $R^4$ of the o-methoxy aryl acid are the same or different and are hydrogen, methoxy or chlorine, provided that neither $R^1$ nor $R^4$ is methoxy.

25. A composition according to Claim 24 wherein the o-methoxy aryl acid is 2-methoxybenzoic acid, 2,4-dimethoxybenzoic acid, 4-chloro-2-methoxybenzoic acid and/or 3-methoxy-2-naphthenoic acid.

26. A composition according to Claim 25 containing

(a) at least 50% by weight of organic polymer containing at least 80% by weight of units of one or more ($C_1$—$C_{18}$)alkyl esters of acrylic and/or methacrylic acid and containing on average at least one carboxylic acid group per polymer molecule,

(b) miscible salt of one or more of the following metals: zinc, zirconium and cadmium, in a ratio of from 1:10 to 10:1 total moles of metal salt per mole of polymer carboxylic acid, and

(c) 0.10% to 10%, by weight of polymer, or o-methoxy aryl acid of the formula

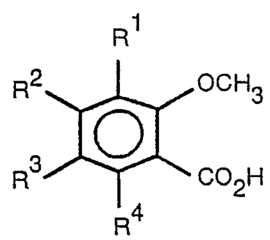

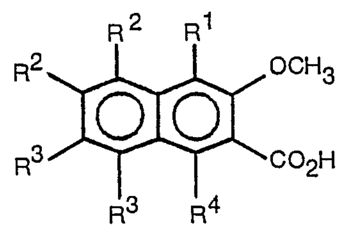

where $R^1$, $R^2$, $R^3$ and $R^4$ are independently hydrogen, halogen, nitro, cyano, amino, ($C_1$—$C_8$)alkyl, ($C_1$—$C_8$)alkoxy, ($C_2$—$C_8$)alkenyl, ($C_5$—$C_8$)cycloalkyl, ($C_5$—$C_8$)cycloalkenyl, ($C_5$—$C_8$)cycloalkynyl, phenyl or phenyl-($C_1$—$C_4$)alkyl, optionally substituted with up to three substituents on the phenyl ring selected from the group consisting of ($C_1$—$C_4$)alkyl, ($C_2$—$C_4$)alkenyl, ($C_2$—$C_4$)alkynyl, ($C_1$—$C_4$)alkoxy, halogen, nitro or ($C_1$—$C_4$)alkyloxy($C_1$—$C_4$)alkyl; provided that neither $R^1$ nor $R^4$ is ($C_1$—$C_8$)alkoxy; provided further that $R^1$ and $R^4$ may, taken together, form a ($C_4$—$C_8$)alkyl, ($C_5$—$C_8$)alkenyl, ($C_5$—$C_8$)alkynyl, or ($C_2$—$C_4$)alkoxy($C_2$—$C_4$)alkyl chain,

(d) optional fillers, extender pigments, tackifying agents, organic solvents, antioxidants, ultraviolet inhibitors, and plasticizers.

27. A composition according to Claim 15 containing

(a) at least 80% by weight of organic polymer containing at least 80% by weight of units of

($C_1$—$C_{18}$)alkyl ester(s) of acrylic and/or methacrylic acid(s) such that the glass transition temperature of the polymer is 0°C or less, containing on average at least one carboxylic acid group per polymer molecule,

(b) miscible salt(s) of zinc, cadmium, zirconium, copper, magnesium, calcium, sodium, potassium, manganese, nickel and/or cobalt in a ratio of from 1:5 to 5:1 total moles of metal salt per mole of polymer carboxylic acid,

(c) 0.10 to 10%, by weight of polymer, of o-methoxy-aryl acid of the formula

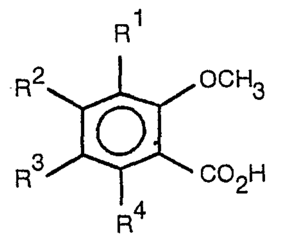

or

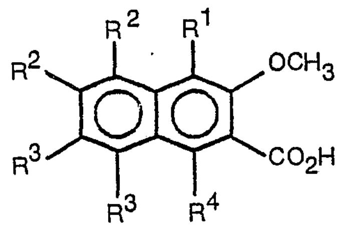

where $R^1$, $R^2$, $R^3$ and $R^4$ are the same or different and are hydrogen, ($C_1$—$C_4$)alkyl, ($C_2$—$C_4$)alkenyl, ($C_1$—$C_4$)alkoxy, halogen, or phenyl, benzyl or phenethyl where the phenyl ring is unsubstituted or substituted with up to two of the substituents: halogen and ($C_1$—$C_3$)alkyl provided that neither $R^1$ nor $R^4$ is ($C_1$—$C_4$)alkoxy, and

(d) optional fillers, extender pigments, tackifying agents, organic solvents, antioxidants, ultraviolet inhibitors and/or plasticizers.

28. A composition according to Claim 27 containing

(a) at least 90% by weight of an organic polymer containing butyl acrylate, butyl methacrylate, 2-ethylhexylacrylate, isodenyl methacrylate, acrylic acid, methacrylic acid and/or acryloxypropanoic acid units such that the polymer contains between 0.5% and 4% by weight of carboxylic acid residue,

(b) zinc octoate, zinc naphthenate, cadmium octoate, and/or zirconium octoate, such that the ratio of metal to polymer acid groups is between .05 and 1.5 and between 0.5 and 4%, by weight of polymer,

(c) 2-methoxybenzoic acid, 2,4-dimethoxybenzoic acid, 4-chloro-2-methoxybenzoic acid and/or 3-methoxy-2-naphthenoic acid.

29. The use of a composition as claimed in any of the preceding claims in or as an adhesive, transmission fluid, encapsulating and/or potting composition, caulking and/or sealant composition or coating composition.

**Patentansprüche**

1. Masse aus

(a) einem organischen Polymeren, das durchschnittlich wenigstens eine Carboxylgruppe pro Polymermolekül enthält,

(b) einer Quelle für Metallionen, wobei diese Quelle mit dem Polymeren (a) mischbar ist und in einer Menge von wenigstens 0,001 Mol pro Mol des Polymeren (a) vorliegt und

(c) o-Methoxyarylsäure und/oder o-Methoxyarylsäureanion, unter der Voraussetzung, daß die Komponente (c) gegebenenfalls vorliegt, wenn die Komponente (b) ein Metallsalz von o-Methoxyarylsäure ist.

2. Masse nach Anspruch 1, dadurch gekennzeichnet, daß sie o-Methoxyarylsäure als Komponente (c) oder Anionen davon in der Komponente (b) oder eine Mischung aus den zwei in einer Gesamtmenge von 0,001 bis 20%, bezogen auf das Gewicht des Polymeren (a) oder 0,1 bis 10% und insbesondere 0,5 bis 4% enthält.

3. Masse nach einem der vorhergehenden Ansprüche, dadurch gekennzeichnet, daß sie wenigstens 0,01 Metallionen oder 0,01 bis 2,0 oder 0,05 bis 1,5 Metallionen pro Polymer (a) —Carboxylgruppe auf äquivalenter Basis enthält.

4. Masse nach einem der vorhergehenden Ansprüche, dadurch gekennzeichnet, daß das Polymer (a) 0,05 bis 20% oder 0,5 bis 4%, bezogen auf das Gewicht, Carbonsäure tragenden Monomereinheiten enthält.

5. Masse nach einem der vorhergehenden Ansprüche, dadurch gekennzeichenet, daß sie wenigstens 50 Gew.-% oder wenigstens 60 Gew.-% oder wenigstens 80 Gew.-% des Polymeren (a), bezogen auf die Gesamtmenge (a) plus (b) plus (c) enthält.

6. Masse nach einem der vorhergehenden Ansprüche, dadurch gekennzeichnet, daß die o-Methoxyarylsäure und/oder das o-Methoxyarylsäureanion als

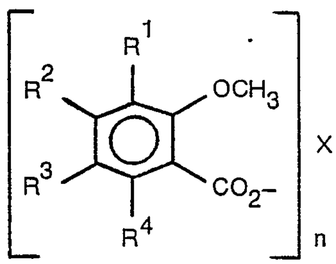

oder

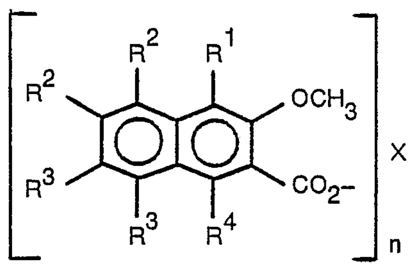

vorliegt, worin X für H und/oder $M^{n+}$ steht, wobei M ein Metall ist und n 1 ist, wenn X H ist, oder 1, 2 oder 3 ist, wenn X für $M^{n+}$ steht, und $R^1$, $R^2$, $R^3$ und $R^4$ gleich oder verschieden sind und stehen können für Wasserstoff, Halogen, Nitro, Cyano, Amino, ($C_1$—$C_8$)Alkyl, ($C_1$—$C_8$)Alkoxy, ($C_2$—$C_8$)Alkenyl, ($C_5$—$C_8$)Cycloalkyl, ($C_5$—$C_8$)Cycloalkenyl, ($C_5$—$C_8$)Cycloalkinyl, ($C_2$—$C_8$)Alkinyl, ($C_1$—$C_4$)Alkoxy($C_1$—$C_4$)alkyl, Phenyl oder Phenyl($C_1$—$C_4$)alkyl, gegebenenfalls substituiert mit bis zu drei der folgenden Substituenten an dem Phenylring: ($C_1$—$C_4$)Alkyl, ($C_2$—$C_4$)Alkenyl, ($C_2$—$C_4$)Alkinyl, ($C_1$—$C_4$)Alkoxy, Halogen, Nitro oder Cyano, oder ($C_1$—$C_4$)Alkoxy($C_1$—$C_4$)alkyl, unter der Voraussetzung, daß weder $R^1$ noch $R^4$ ($C_1$—$C_8$)Alkoxy ist, wobei die weitere Voraussetzung gilt, daß $R^1$ und $R^4$ zusammen eine ($C_4$—$C_8$)Alkyl-, ($C_5$—$C_8$)Alkenyl-, ($C_2$—$C_4$)Alkoxy($C_2$—$C_4$)Alkyl- oder ($C_5$—$C_8$)Alkinylkette bilden können.

7. Masse nach Ansprüche 6, dadurch gekennzeichnet, daß $R^1$, $R^2$, $R^3$ und $R^4$ gleich oder verschieden sind und für Wasserstoff, ($C_1$—$C_4$)Alkyl, ($C_2$—$C_4$)Alkenyl, ($C_2$—$C_4$)Alkinyl, ($C_2$—$C_4$)Alkoxy, Halogen oder Phenyl, Benzyl oder Phenethyl bedeuten, wobei der Phenylring nichtsubstituiert oder mit bis zu zwei der folgenden Substituenten substituiert sein kann: ($C_1$—$C_3$)Alkyl und Halogen, unter der Voraussetzung, daß weder $R^1$ noch $R^4$ für ($C_1$—$C_4$)Alkoxy stehen.

8. Masse nach Ansprüche 7, dadurch gekennzeichnet, daß $R^1$, $R^2$, $R^3$ und $R^4$ gleich oder verschieden sind und unabhängig voneinander für Wasserstoff, Methoxy oder Chlor stehen, unter der Voraussetzung, daß weder $R^1$ noch $R^4$ Methoxy sind.

9. Masse nach Ansprüche 8, dadurch gekennzeichnet, daß die o-Methoxyarylsäure und/oder das o-Methoxyarylsäureanion als 2,4-Dimethoxybenzoesäure, 4-Chlor-2-methoxybenzoesäure oder 3-Methoxy-2-naphthensäure und/oder das Metallsalz davon vorliegt.

10. Masse nach einem der vorhergehenden Ansprüche, dadurch gekennzeichnet, daß das Metall aus einem oder mehreren der Metalle der Gruppen IA, IB, IIA, IIB, IIIB, IVB, VB, VIB, VIIB, VIII, IIIA, IVA, VA und VIA des Periodischen Systems der Elemente (Merck Index; 9. Ausgabe, Innenseite der Titelseite) besteht.

11. Masse nach Ansprüche 10, dadurch gekennzeichnet, daß das Metall aus Natrium, Kalium, Lithium, Kupfer, Gallium, Zinn, Cer, Titan, Vanadium, Chrom, Molybdän, Mangan, Eisen, Kobalt, Nickel, Beryllium, Kadmium, Kalzium, Magnesium, Zink, Zirkonium, Barium, Strontium, Aluminium, Wismuth, Antimon und/oder Blei besteht.

12. Masse nach einem der vorhergehenden Ansprüche, dadurch gekennzeichnet, daß das Polymere Einheiten von einem oder mehreren ($C_1$—$C_{18}$)Alkylestern von Acrylsäure oder Methacrylsäure enthält.

13. Masse nach einem der vorhergehenden Ansprüche, dadurch gekennzeichnet, daß das Polymere eine Glasübergangstemperatur von weniger als 5°C oder weniger als 0°C besitzt.

14. Masse nach einem der vorhergehenden Ansprüche, dadurch gekennzeichnet, daß das Polymere Einheiten von Butylacrylat, Butylmethacrylat, 2-Ethylhexylacrylat, Isodecylmethacrylat, Acrylsäure, Methacrylsäure, Itaconsäure, Maleinsäure, und/oder Acryloxypropionsäure enthält.

15. Masse aus

(a) einem organischen Polymeren, das wenigstens eine Carbonsäuregruppe pro Polymermolekül enthält,

(b) einem mischbaren Metallsalz in einer Menge von wenigstens $10^{-3}$ Mol des Metallsalzes pro Mol der Polymercarbonsäure,

(c) $10^{-2}$ bis 20 Gew.-%, bezogen auf das organische Polymere, o-Methoxyarylsäure und/oder o-Methoxyarylsäureanion.

16. Masse nach Ansprüche 15, dadurch gekennzeichnet, daß sie enthält

(a) wenigstens 60 Gew.-% eines organischen Polymeren, enthaltend durchschnittlich wenigstens eine Carbonsäuregruppe pro Polymermolekül

(b) ein mischbares Metallsalz in einer Menge von 1:$10^2$ bis 10:1 Gesamtmol des Metallsalzes zu den Molen der Polymercarbonsäure, und

(c) 0,01 bis 10%, bezogen auf das Gewicht des Polymeren o-Methoxyaryläure und/oder o-Methoxyarylsäureanion.

17. Masse nach Ansprüche 16, dadurch gekennzeichnet, daß sie enthält

(a) wenigstens 80 Gew.-% des organischen Polymeren

(b) das mischbare Metallsalz in einer Menge von 1:5 bis 5:1 Gesamtmole des Metallsalzes zu den Molen der Polymer (a) —Carbonsäure, und

(c) 0,5 bis 5 Gew.-%, bezogen auf das Gewicht des Polymeren, der o-Methoxyarylsäure und/oder das o-Methoxyarylsäureanions.

18. Masse nach Ansprüche 15, dadurch gekennzeichnet, daß sie enthält

(a) wenigstens 60 Gew.-% des organischen Polymeren aus wenistens 60 Gew.-% Einheiten von ($C_1$—$C_{18}$) Alkylester(n) von Acryläure und/oder Methacrylsäure, und enthaltend 0,1 bis 10 Gew.-% Carbonsäure tragende Einheiten

(b) ein mischbares Salz eines Metalls der Gruppen IA, IIA, IB, IIB, IIIB, IVB, VB, VIB oder VIII des Periodischen Systems der Elemente in einer Menge von 1:100 bis 10:1 Gesamtmole des Metallsalzes zu den Molen der Polymercarbonäure, und

(c) 0,10 bis 10%, bezogen auf das Gewicht des Polymeren (a), o-Methoxyarylsäure und/oder o-Methoxyarylsäureanion.

19. Masse nach Ansprüche 18, dadurch gekennzeichnet, daß sie enthält

(a) wenigstens 80 Gew.-% des organischen Polymeren aus wenistens 80 Gew.-% der definierten Einheiten

(b) ein mischbares Salz eines Metalls der Gruppen IA, IIA, IIB, IB, IVB, VIB, VIIB oder VIII des Periodischen Systems der Elemente.

20. Masse nach Ansprüche 19, dadurch gekennzeichnet, daß sie enthält

(a) ein Polymeres, das 0,5 bis 5 Gew.-% Carbonsäure tragende Monomerreste enthält, und

(b) das Metallsalz in einer Menge von 1:5 bis 5:1 Gesamtmole des Metallsalzes zu den Molen der Polymercarbonsäure.

21. Masse nach Ansprüche 15, dadurch gekennzeichnet, daß sie enthält

(a) wenigstens 50 Gew.-% des organischen Polymeren aus wenigstens 80 Gew.-% Einheiten von ($C_1$—$C_{18}$) Alkylester(n) von Acrylsäure und/oder Methacrylsäure, wobei das Polymere 0,1 bis 10 Gew.-% Carbonsäure tragende Monomerreste in einer solchen Weise enthält, daß die Glasübergangstemperatur des Polymeren weniger als 5°C beträgt,

(b) ein mischbares Salz eines Metalls der Gruppen IA, IIA, IB, IIB, IVB, VIB, VIIB oder VIII des Periodischen Systems der Elemente in einer Verbindung von 1:10 bis 10:1 Gesamtmole des Metallsalzes pro Mol der Polymercarbonäure, und

(c) 0,10 bis 10%, bezogen auf das Gewicht des Polymeren, o-Methoxyarylsäure und/oder o-Methoxyarylsäureanion.

22. Masse nach Ansprüche 15, dadurch gekennzeichnet, daß sie enthält

(a) ein organisches Polymeres, das wenigstens 60 Gew.-% Einheiten von ($C_1$—$C_{18}$)Alkylester(n) von Acrylsäure und/oder Methacryläure enthält, und durchschnittlich wenigstens eine Carbonsäuregruppe pro Polymermolekül enthält

(b) ein mischbares Salz eines Metalls der Gruppen IA, IIA, IB, IIB, IVB, VIB, VIIB oder VIII des Periodischen Systems der Elemente in einer Menge von 1:10 bis 10:1 Gesamtmole des Metallsalzes pro Mol der Polymercarbonsäure, und

(c) 0,10 bis 10%, bezogen auf das Gewicht des Polymeren, o-Methoxyaryläure der Formel

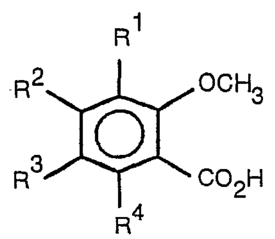

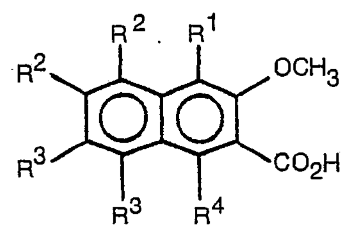

worin $R^1$, $R^2$, $R^3$ und $R^4$ gleich oder verschieden sind und stehen können für Wasserstoff, Halogen, Nitro, Cyano, Amino, ($C_1$—$C_4$)Alkyl, ($C_1$—$C_4$)Alkoxy, ($C_2$—$C_4$)Alkenyl, ($C_5$—$C_8$)Cycloalkyl, ($C_5$—$C_8$)Cycloalkenyl, ($C_5$—$C_8$)Cycloalkinyl, Phenyl oder Phenyl($C_1$—$C_4$)alkyl, gegebenenfalls substituiert mit bis zu drei Substituenten in dem Phenylring, ausgewählt aus der Gruppe, die besteht aus ($C_1$—$C_4$)Alkyl, ($C_2$—$C_4$)Alkenyl, ($C_2$—$C_4$)Alkinyl, ($C_1$—$C_4$)Alkoxy, Wasserstoff, Halogen, Nitro oder ($C_1$—$C_4$)Alkyloxy($C_1$—$C_4$)alkyl, unter der Vorausetzung, daß weder $R^1$ noch $R^4$ für ($C_1$—$C_8$)Alkoxy steht, sowie unter der weiteren Voraussetzung, daß $R^1$ und $R^4$ zusammen eine ($C_1$—$C_8$)Alkyl-, ($C_5$—$C_8$)Alkinyl- oder ($C_2$—$C_4$)Alkoxy($C_2$—$C_4$)alkylkette bilden können.

23. Masse nach Ansprüche 22, dadurch gekennzeichnet, daß die Substituenten $R^1$, $R^2$, $R^3$ und $R^4$ der o-Methoxyarylsäure gleich oder verschieden sind und für Wasserstoff ($C_1$—$C_4$)Alkyl, ($C_1$—$C_4$)Alkenyl, ($C_2$—$C_4$)Alkinyl, ($C_1$—$C_4$)Alkoxy, Halogen, Phenyl, Benzyl oder Phenetyl stehen, wobei der Phenylring nicht substituiert ist oder substituiert ist mit bis zu zwei der folgenden Substituenten: ($C_1$—$C^3$)Alkyl und Halogen, unter der Voraussetzung, daß weder $R^1$ noch $R^4$ für ($C_1$—$C_4$)Alkoxy stehen.

24. Masse nach Ansprüche 23, dadurch gekennzeichnet, daß die Substituenten $R^1$, $R^2$, $R^3$ und $R^4$ der o-Methoxyarylsäure gleich oder verschieden sind und für Wasserstoff, Methoxy oder Chlor stehen, unter der Voraussetzung, daß weder $R^1$ noch $R^4$ Methoxy ist.

25. Masse nach Ansprüche 24, dadurch gekennzeichnet, daß die o-Methoxyarylsäure aus 2-Methoxybenzoesäure, 2,4-Dimethoxybenzoesäure, 4-Chlor-2-methoxybenzoesäure und/oder 3-Methoxy-2-naphthensäure besteht.

26. Masse nach Ansprüche 25, dadurch gekennzeichnet, daß sie enthält

(a) wenigstens 50 Gew.-% eines organischen Polymeren, enthaltend wenigstens 80 Gew.-% Einheiten von einem oder mehreren ($C_1$—$C_{18}$)Alkylestern von Acrylsäure und/oder Methacrylsäure und enthaltend durchschnittlich wenigstens eine Carbonsäuregruppe pro Polymermolekül

(b) ein mischbares Salz eines oder mehrerer der Metalle Zink, Zirkonium und Cadmium in einer Menge von 1:10 bis 10:1 Gesamtmole des Metallsalzes pro Mol der Polymercarbonäure und

(c) 0,10 bis 10%, bezogen auf das Gewicht des Polymeren, o-Methoxyaryläure der Formel

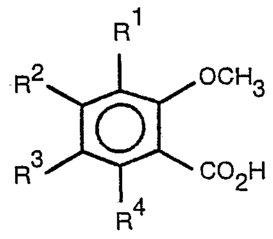

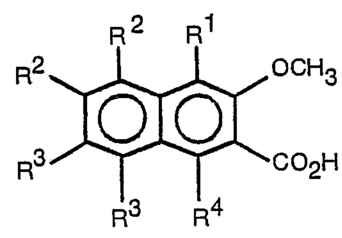

worin $R^1$, $R^2$, $R^3$ und $R^4$ unabhängig voneinander stehen für Wasserstoff, Halogen, Nitro, Cyano, Amino, ($C_1$—$C_8$)Alkyl, ($C_1$—$C_8$)Alkoxy, ($C_2$—$C_8$)Alkenyl, ($C_5$—$C_8$)Cycloaklyl, ($C_5$—$C_8$)Cycloalkenyl, ($C_5$—$C_8$)Cycloalkinyl, Phenyl oder Phenyl-($C_1$—$C_4$)alkyl, gegebenenfalls substituiert mit bis zu drei Substituenten an dem Phenylring, ausgewählt aus der Gruppe, die aus ($C_2$—$C_4$)Alkyl, ($C_1$—$C_4$)Alkenyl, ($C_2$—$C_4$)Alkinyl, ($C_1$—$C_4$)Alkoxy, Halogen, Nitro oder ($C_1$—$C_4$)Alkoxy($C_1$—$C_4$)alkyl besteht, unter der Voraussetzung, daß weder $R^1$ noch $^4$ für ($C_1$—$C_8$)Alkoxy steht, sowie unter der weiteren Voraussetzung, daß $R^1$ und $R^4$ zusammen eine ($C_4$—$C_8$)Alkyl-, ($C_5$—$C_8$)Alkenyl-, ($C_5$—$C_8$)Alkinyl- oder ($C_2$—$C_4$)Alkoxy($C_2$—$C_4$)alkylkette bilden können,

(d) organischen Füllstoffen, Verstreckungspigmenten, klebrigmachenden Mitteln, organischen Lösungsmitteln, Antioxidationsmitteln, Ultraviolettinhibitoren und Weichmachern.

27. Masse nach Ansprüche 15, dadurch gekennzeichnet, daß sie enthält

(a) wenigstens 80 Gew.-% eines organischen Polymeren, enthaltend wenigstens 80 Gew.-% Einheiten von ($C_1$—$C_{18}$)Alkylester(n) von Acrylsäure und/oder Methacrylsäure in der Weise, daß die Glasübergangstemperatur des Polymeren 0°C oder weniger beträgt, wobei sie außerdem durchschnittlich wenigstens eine Carbonsäuregruppe pro Polymermolekül enthält,

(b) eines oder mehrere mischbare Salze von Zink, Cadmium, Zirkonium, Kupfer, Magnesium, Kalzium, Natrium, Kalium, Mangan, Nickel und/oder Kobalt in einer Menge von 1:5 bis 5:1 Gesamtmole des Metallsalzes pro Mol der Polymercarbonäure

(c) 0,10 bis 10%, bezogen auf das Gewicht des Polymeren, o-Methoxyaryläure der Formel

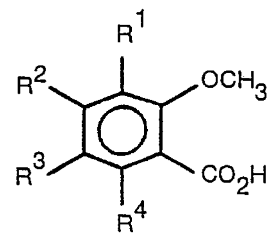

oder

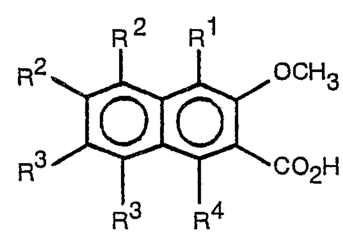

worin $R^1$, $R^2$, $R^3$ und $R^4$ gleich oder verschieden sind und stehen für Wasserstoff, ($C_1$—$C_4$)Alkyl, ($C_2$—$C_4$)Alkenyl, ($C_1$—$C_4$)Alkoxy, Halogen oder Phenyl, Benzyl oder Phenetyl, wobei der Phenylring nicht substituiert ist oder substituiert ist mit bis zu zwei der Substituenten Halogen und ($C_1$—$C_3$)Alkyl, unter der Voraussetzung, daß weder $R^1$ noch $R^4$ für ($C_1$—$C_4$)Alkoxy steht, und

(d) gegebenenfalls Füllstoffen, Verstreckungspigmenten, klebrigmachenden Mitteln, organischen Lösungmitteln, Antioxidationsmitteln, Ultraviolettinhibitoren und/oder Weichmachern.

28. Masse nach Ansprüche 27, dadurch gekennzeichnet, daß sie enthält

(a) wenigstens 90 Gew.-% eines organischen Polymeren, enthaltend Butylacrylat-, Butylmethacrylat-, 2-Ethylhexylacrylat-, Isodenylmethacrylat-, Acrylsäure-, Methacrylsäure- und/oder Acryloxypropancarbonsäure-Einheiten in der Weise, daß das Polymere zwischen 0,5 und 4 Gew.-% des Carbonsäurerestes enthält,

(b) Zinkoctoat, Zinknaphthanat, Cadmiumoctoat und/oder Zirkoniumoctoat in der Weise, daß das Verhältnis von Metall zu den Polymersäuregruppen zwischen 0,05 und 1,5 sowie zwischen 0,5 und 4%, bezogen auf das Gewicht des Polymeren, liegt,

(c) 2-Methoxybenzoesäure, 2,4-Dimethoxybenzoesäure, 4-Chlor-2-methoxybenzoesäure und/oder 3-Methoxy-2-naphthensäure.

29. Verwendung einer Masse gemäß einem der vorhergehenden Ansprüche als Klebstoff, Übertragungsfluid, Einkapselungs- und/oder Eintopfmasse, Kitt- und/oder Abdichtungsmasse oder Beschichtungsmasse oder für eine Verwendung in einer derartigen Masse.

**Revendications**

1. Une composition comprenant:
(a) un polymère organique contenant en moyenne au moins un groupe carboxylique par molécule de polymère;
(b) une source d'ions métalliques, ladite source étant miscible avec le polymère (a) et présente en une quantité d'au moins 0,001 mole par mole de polymère (a); et
(c) un acide o-méthoxy-arylique et/ou un anion d'acide o-méthoxy-arylique; sous réserve que le composant (c) est facultatif si le composant (b) comprend un sel métallique d'acide o-méthoxy-arylique.

2. Une composition comme revendiqué dans la revendication 1 qui contient un acide o-méthoxy-arylique comme composant (c) ou ses anions dans le composant (b) ou un mélange des deux en une quantité totale de 0,001 à 20% par rapport au poids du polymère (a) ou de 0,1 à 10% et mieux de 0,5 à 4%.

3. Une composition comme revendiqué dans l'une quelconque des revendications précédentes qui contient au moins 0,01 ion métallique ou 0,01 à 2,0 ou 0,05 à 1,5 ion métallique par groupe carboxylique du polymère (a) sur la base de l'equivalence.

4. Une composition comme revendiqué dans l'une quelconque des revendications précédentes dans laquelle le polymère (a) contient 0,05 à 20% ou contient 0,5 à 4% en poids de motifs monomères portant un acide carboxylique.

5. Une composition comme revendiqué dans l'une quelconque des revendications précédentes contenant au moins 50% en poids ou au moins 60% en poids ou au moins 80% en poids de polymère (a) relativement au total (a) plus (b) plus (c).

6. Une composition comme revendiqué dans l'une quelconque des revendications précédentes dans laquelle l'acide o-méthoxy-arylique et/ou l'anion d'acide o-méthoxy-arylique est présent sous forme de

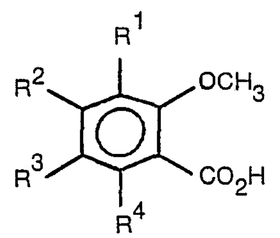

ou

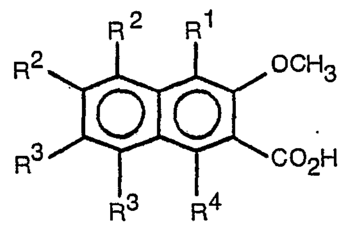

où X est H et/ou $M^{n+}$, où M est un métal et n est 1 lorsque X est H ou 1, 2 ou 3 lorsque X est $M^{n+}$ et où $R^1$, $R^2$, $R^3$ et $R^4$ peuvent être semblables ou différents et peuvent être un hdyrogène, un halogène, un nitro, un cyano, un amino, un alcoyle ($C_1$—$C_8$), un alcoxy ($C_1$—$C_8$), un alcényle ($C_2$—$C_8$), un cycloalcoyle ($C_5$—$C_8$), un cycloalcényle ($C_5$—$C_8$), un cycloalcynyle ($C_5$—$C_8$), un alcynyle ($C_2$—$C_8$), un alcoxy ($C_1$—$C_4$) alcoyle ($C_1$—$C_4$), un phényle ou un phényl-alcoyle ($C_1$—$C_4$), éventuellement substitués avec jusqu'à 3 des substituants suivants sur le cycle phényle: un alcoyle ($C_1$—$C_4$), un alcényle ($C_2$—$C_4$), un alcynyle ($C_2$—$C_4$), un alcoxy ($C_1$—$C_4$), un halogène, un nitro ou un cyano ou un alcoxy ($C_1$—$C_4$)alcoyle($C_1$—$C_4$) sous réserve que ni $R^1$ ni $R^4$ ne soient un alcoxy ($C_1$—$C_8$), sous réserve de plus que $R^1$ et $R^4$ puissent, pris ensemble, former un chaîne alcoyle ($C_4$—$C_8$), alcényle ($C_5$—$C_8$), alcoxy ($C_2$—$C_4$) alcoyle ($C_4$—$C_4$) ou alcynyle ($C_5$—$C_8$).

7. Une composition comme revendiqué dans la revendication 6, dans laquelle $R^1$, $R^2$, $R^3$ et $R^4$ sont semblables ou différents et sont un hydrogène, un alcoyle ($C_1$—$C_4$), un alcényle ($C_2$—$C_4$), un alcynyle ($C_2$—$C_4$), un alcoxy ($C_1$—$C_4$), un halogène ou un phényle, un benzyle ou un phénéthyle où le cycle phényle peut être non substitué ou être substitué par jusqu'à deux des substituants suivants: un alcoyle ($C_1$—$C_3$) et un halogène, sous réserve que ni $R^1$ ni $R^4$ ne soient un alcoxy ($C_1$—$C_4$).

8. Une composition comme revendiqué dans la revendication 7, dans laquelle $R^1$, $R^2$, $R^3$ et $R^4$ sont semblables ou différents et sont indépendamment un hydrogène, un méthoxy ou un chlore, sous réserve que ni $R^1$ ni $R^4$ ne soient un méthoxy.

9. Une composition comme revendiqué dans la revendication 8 dans laquelle l'acide o-méthoxy-arylique et/ou l'anion d'acide o-méthoxy-arylique sont présents sous forme de l'acide 2,4-diméthoxybenzoïque, de l'acide 4-chloro-2-méthoxybenzoïque ou de l'acide 3-méthoxy-2-naphténoïque et/ou d'un de leurs sels métalliques.

10. Une composition comme revendiqué dans l'une quelconque des revendications précédentes dans laquelle le métal est un ou plusieurs des métaux du groupe: IA, IB, IIA, IIB, IIIB, IVB, VB, VIB, VIIB, VIII, IIIA, IVA, VA et VIA de la classification périodique (Merck Index, 9ème edition, première page de couverture).

11. Une composition comme revendiqué dans la revendication 10 dans laquelle le métal est: le sodium, le potassium, le lithium, le cuivre, le gallium, l'étain, le cérium, le titane, le vanadium, le chrome, le molybdène, le manganèse, le fer, le cobalt, le nickel, le béryllium, le cadmium, le calcium, la magnésium, le zinc, le zirconium, le baryum, le strontium, l'aluminium, le bismuth, l'antimoine et/ou le plomb.

12. Une composition comme revendiqué dans l'une quelconque des revendications précédentes dans laquelle le polymère contient des motifs d'un ou plusieurs esters d'alcoyle ($C_1$—$C_{18}$) de l'acide acrylique ou méthacrylique.

13. Une composition comme revendiqué dans l'une quelconque des revendications précédentes dans laquelle le polymère a une température de transition vitreuse inférieure à 5°C ou inférieure à 0°C.

14. Une composition comme revendiqué dans l'une quelconque des revendications précédentes dans laquelle le polymère contient des motifs d'acrylate de butyle, de méthacrylate de butyle, d'acrylate de 2-éthylhexyle, de méthacrylate d'isodécyle, d'acide acrylique, d'acide méthacrylique, d'acide itaconique, d'acide maléique et/ou d'acide acryloxypropanoïque.

15. Une composition comprenant

(a) un polymère organique contenant au moins un groupe acide carboxylique par molécule de polymère,

(b) un sel métallique miscible dans un rapport d'au moins $10^{-3}$ mole du sel métallique par rapport aux moles de l'acide carboxylique polymère carboxylique polymère,

(c) $10^{-2}$ à 20% en poids, par rapport au polymère organique, d'acide o-méthoxy-arylique et/ou d'anion d'acide o-méthoxyarylique.

16. Une composition selon la revendication 15 contenant

(a) au moins 60% en poids de polymère organique contenant en moyenne au moins un groupe acide carboxylique par molécule de polymère,

(b) un sel métallique miscible dans un rapport de $1/10^2$ à 10/1 moles totales de sels métalliques par rapport aux moles de l'acide carboxylique polymère, et

(c) 0,10% à 10%, par rapport au poids du polymère, d'acide o-méthoxy-arylique et/ou d'anion d'acide o-méthoxyarylique.

17. Une composition selon la revendication 16 contenant

(a) au moins 80% en poids du polymère organique,

(b) le sel métallique miscible dans un rapport de 1/5 à 5/1 moles totales du sel métallique aux moles de l'acide carboxylique polymère (a) et

(c) 0,5% à 5%, par rapport au poids du polymère, de l'acide o-méthoxy-arylique et/ou de l'anion d'acide o-méthoxy-arylique.

18. Une composition selon la revendication 15 contenant

(a) au moins 60% en poids de polymère organique comprenant au moins 60% en poids de motifs d'ester(s) d'alcoyle ($C_1$—$C_{18}$) d'acide acrylique et/ou méthacrylique et contenant 0,1 à 10% en poids de motifs portant un acide carboxylique,

(b) un sel miscible d'un métal des groupes IA, IIA, IB, IIB, IIIB, IVB, VB, VIB ou VIII de la classification périodique dans un rapport de 1/10 à 10/1 moles totales de sel métallique relativement aux moles d'acide carboxylique polymère, et

(c) 0,10% à 10%, par rapport au poids du polymère (a), d'acide o-méthoxy-arylique et/ou d'anion d'acide o-méthoxy-arylique.

19. Une composition selon la revendication 18 contenant

(a) au moins 80% en poids du polymère organique comprenant au moins 80% en poids des motifs définis,

(b) un sel miscible d'un métal des groupes IA, IIA, IIB, IB, IVB, VIB, VIIB ou VIII de la classification périodique.

20. Une composition selon la revendication 19 contenant

(a) un polymere contenant 0,5 à 5% en poids de restes de monomère portant un acide carboxylique; et

(b) le sel métallique dans un rapport de 1/5 à 5/1 moles totales de sel métallique relativement aux moles d'acide carboxylique polymère.

21. Une composition selon la revendication 15 contenant

(a) au moins 50% en poids de polymère organique comprenant au moins 80% en poids de motifs d'ester(s) d'alcoyle ($C_1$—$C_{18}$) d'acide acrylique et/ou méthacrylique, le polymère contenant 0,1 à 10% en poids de restes de monomère portant un acide carboxylique, si bien que la température de transition vitreuse du polymère est inférieure à 5°C,

(b) un sel miscible d'un métal des groupes IA, IIA, IB, IIB, IVB, VIB, VIIB ou VIII de la classification périodique dans un rapport de 1/10 à 10/1 moles totales du sel métallique par mole de l'acide carboxylique polymère et

(c) 0,10% à 10%, par rapport au poids du polymère, d'acide o-méthoxy-arylique et/ou d'anion d'acide o-méthoxy-arylique.

22. Une composition selon la revendication 15 contenant

(a) un polymère organique contenant au moins 60% en poids de motifs d'ester(s) d'alcoyle ($C_1$—$C_{18}$) d'acide acrylique et/ou méthacrylique et contenant en moyenne au moins un groupe acide carboxylique par molécule de polymère,

(b) un sel miscible d'un métal des groupes IA, IIA, IB, IIB, IVB, VIB, VIIB ou VIII de la classification périodique dans un rapport de 1/10 à 10/1 moles totales de sel métallique par mole d'acide carboxylique polymère, et

(c) 0,10% à 10%, par rapport au poids du polymère, d'acide o-méthoxy-arylique répondant à la formule

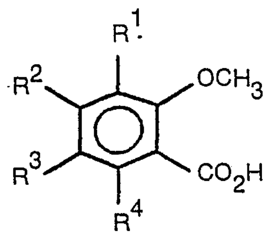

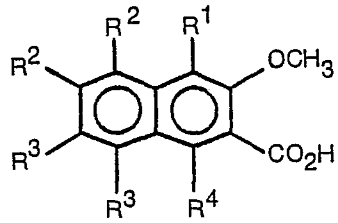

où $R^1$, $R^2$, $R^3$ et $R^4$ sont semblables ou différents et peuvent être un hydrogène, un halogène, un nitro, un cyano, un amino, un alcoyle ($C_1$—$C_4$), un alcoxy ($C_1$—$C_4$), un alcényle ($C_2$—$C_4$), un cycloalcoyle ($C_5$—$C_8$), un cycloalcényle ($C_5$—$C_8$), un cycloalcynyle ($C_5$—$C_8$), un phényle ou un phényl-alcoyle ($C_1$—$C_4$), éventuellement substitués sur le cycle phényle avec jusqu'à trois substituants choisis dans le groupe constitué par un alcoyle ($C_1$—$C_4$), un alcényle ($C_2$—$C_4$), un alcynyle ($C_2$—$C_4$), un alcoxy ($C_2$—$C_4$), un hydrogène, un halogène, un nitro ou un alcoxy ($C_1$—$C_4$) alcoyle ($C_1$—$C_4$); sous réserve que ni $R^1$ ni $R^4$ ne soient un alcoxy ($C_1$—$C_8$); sous réserve de plus que $R^1$ et $R^4$ peuvent, pris ensemble, former une chaîne alcoyle ($C_4$—$C_8$), alcynyle ($C_5$—$C_8$) ou alcoxy ($C_2$—$C_4$) alcoyle ($C_2$—$C_4$).

23. Une composition selon la revendication 22 dans laquelle les substituants $R^1$, $R^2$, $R^3$ et $R^4$ de l'acide o-méthoxy-arylique sont semblables ou différents et sont un hydrogène, un alcoyle ($C_1$—$C_4$), un alcényle ($C_2$—$C_4$), un alcynyle ($C_2$—$C_4$), un alcoxy ($C_1$—$C_4$), un halogène, un phényle, un benzyle ou un phénéthyle dont le cycle phényle est non substitué ou substitué avec jusqu'à deux des substituants suivants: un alcoyle ($C_1$—$C_3$) et un halogène; sous réserve que ni $R^1$, ni $R^4$ ne soient un alcoxy ($C_1$—$C_4$).

24. Une composition selon la revendication 23 dans laquelle les substituants $R^1$, $R^2$, $R^3$ et $R^4$ de l'acide o-méthoxy-arylique sont semblables ou différents et sont un hydrogène, un méthoxy ou un chlore, sous réserve que ni $R^1$ ni $R^4$ ne soient un méthoxy.

25. Une composition selon la revendication 24 dans laquelle l'acide o-méthoxy-arylique est l'acide 2-méthoxybenzoïque, l'acide 2,4-diméthoxybenzoïque, l'acide 4-chloro-2-méthoxybenzoïque et/ou l'acide 3-méthoxy-2-naphténoïque.

26. Une composition selon la revendication 25 contenant

(a) au moins 50% en poids de polymère organique contenant au moins 80% en poids de motifs d'un ou plusieurs esters d'alcoyle ($C_1$—$C_{18}$) d'acide acrylique et/ou d'acide méthacrylique et contenant en moyenne au moins un groupe acide carboxylique par molécule de polymère,

(b) un sel miscible d'un ou plusieurs des métaux suivants: le zinc, le zirconium et le cadmium, dans un rapport de 1/10 à 10/1 moles totales de sel métallique par mole d'acide carboxylique polymère, et

(c) 0,10% à 10%, par rapport au poids du polymère, d'acide o-méthoxy-arylique de formule

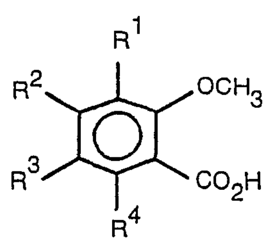

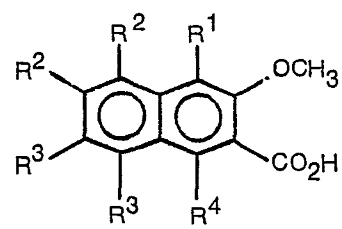

où $R^1$, $R^2$, $R^3$ et $R^4$ sont indépendamment un hydrogène, un halogène, un nitro, un cyano, un amino, un alcoyle ($C_1$—$C_8$), un alcoxy ($C_1$—$C_8$), un alcényle ($C_2$—$C_8$), un cycloalcoyle ($C_5$—$C_8$), un cycloalcényle ($C_5$—$C_8$), un cycloalcynyle ($C_5$—$C_8$), un phényle ou un phénylalcoyle ($C_1$—$C_4$), éventuellement substitués sur le cycle phényle avec jusqu'à trois substituants choisis dans le groupe constitué par un alcoyle ($C_1$—$C_4$), un alcényle ($C_2$—$C_4$), un alcynyle ($C_2$—$C_4$), un alcoxy ($C_1$—$C_4$), un halogène, un nitro ou un alcoxy ($C_1$—$C_4$) alcoyle ($C_1$—$C_4$); sous réserve que ni $R^1$ ni $R^4$ ne soient un alcoxy ($C_1$—$C_8$); sous réserve de plus que $R^1$ et $R^4$ puissant, pris ensemble, former une chaîne alcoyle ($C_4$—$C_8$), alcényle ($C_5$—$C_8$), alcynyle ($C_5$—$C_8$) ou alcoxy ($C_2$—$C_4$) alcoyle ($C_2$—$C_4$).

(d) facultativement des charges, des pigments de charge, des agents poissants, des solvants organiques, des antioxydants, des inhibiteurs des ultraviolets et des plastifiants.

27. Une composition selon la revendication 15 contenant

(a) au moins 80% en poids d'un polymère organique contenant au moins 80% en poids de motifs d'ester(s) d'alcoyle ($C_1$—$C_{18}$) d'acide(s) acrylique et/ou méthacrylique si bien que la température de transition vitreuse du polymère est de 0°C ou moins, contenant en moyenne au moins un groupe d'acide carboxylique par molécule de polymère,

(b) un ou plusieurs sels miscibles de zinc, cadmium, zirconium, cuivre, magnésium, calcium, sodium, potassium, manganèse, nickel et/ou cobalt dans un rapport de 1/5 à 5/1 moles totales de sel métallique par mole d'acide carboxylique polymère,

(c) 0,10 à 10%, par rapport au poids du polymère, d'acide o-méthoxy-arylique de formule

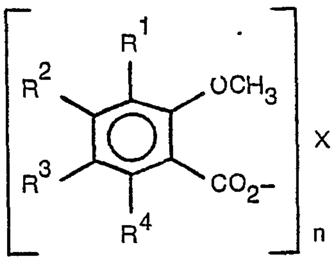

ou

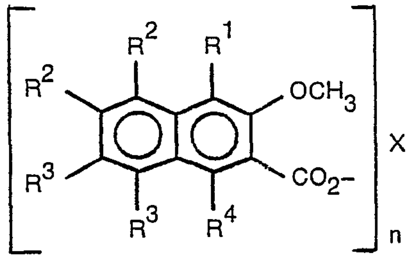

où $R^1$, $R^2$, $R^3$ et $R^4$ sont semblables ou différents et sont un hydrogène, un alcoyle ($C_1$—$C_4$), un alcényle ($C_2$—$C_4$), un alcoxy ($C_1$—$C_4$), un halogène ou un phényle, un benzyle ou un phénéthyle où le cycle phényle est non substitué ou est substitué par jusqu'à deux des substituants: halogène et alcoyle ($C_1$—$C_3$) sous réserve que ni $R^1$ ni $R^4$ ne soient un alcoxy ($C_1$—$C_4$) et

(d) facultativement des charges, des pigments de charge, des agents poissants, des solvants organiques, des antioxydants, des inhibiteurs des ultraviolets et/ou des plastifiants.

28. Une composition selon la revendication 27 contenant

(a) au moins 90% en poids d'un polymère organique contenant des motifs d'acrylate de butyle, de méthacrylate de butyle, d'acrylate de 2-éthylhexyle, de méthacrylate d'isodécyle, d'acide acrylique, d'acide méthacrylique et/ou d'acide acryloxypropanoïque pour que le polymère contienne entre 0,5% et 4% en poids de reste d'acide carboxylique,

(b) de l'octoate de zinc, du naphténate de zinc, de l'octoate de calcium et/ou de l'octoate de zirconium pour que le rapport du métal aux groupes acides du polymère soit entre 0,05 et 1,5, et entre 0,5 et 4% par rapport au poids du polymère,

(c) d'acide 2-méthoxybenzoïque, d'acide 2,4-diméthoxybenzoïque, d'acide 4-chloro-2-méthoxybenzoïque et/ou d'acide 3-méthoxy-2-naphténoique.

29. L'emploi d'une composition comme revendiqué dans l'une quelconque des revendications précédentes dans ou comme un adhésif, un fluide de transmission, une composition d'encapsulage et/ou d'enrobage, une composition d'étanchéité et/ou d'obturation ou une composition de revêtement.

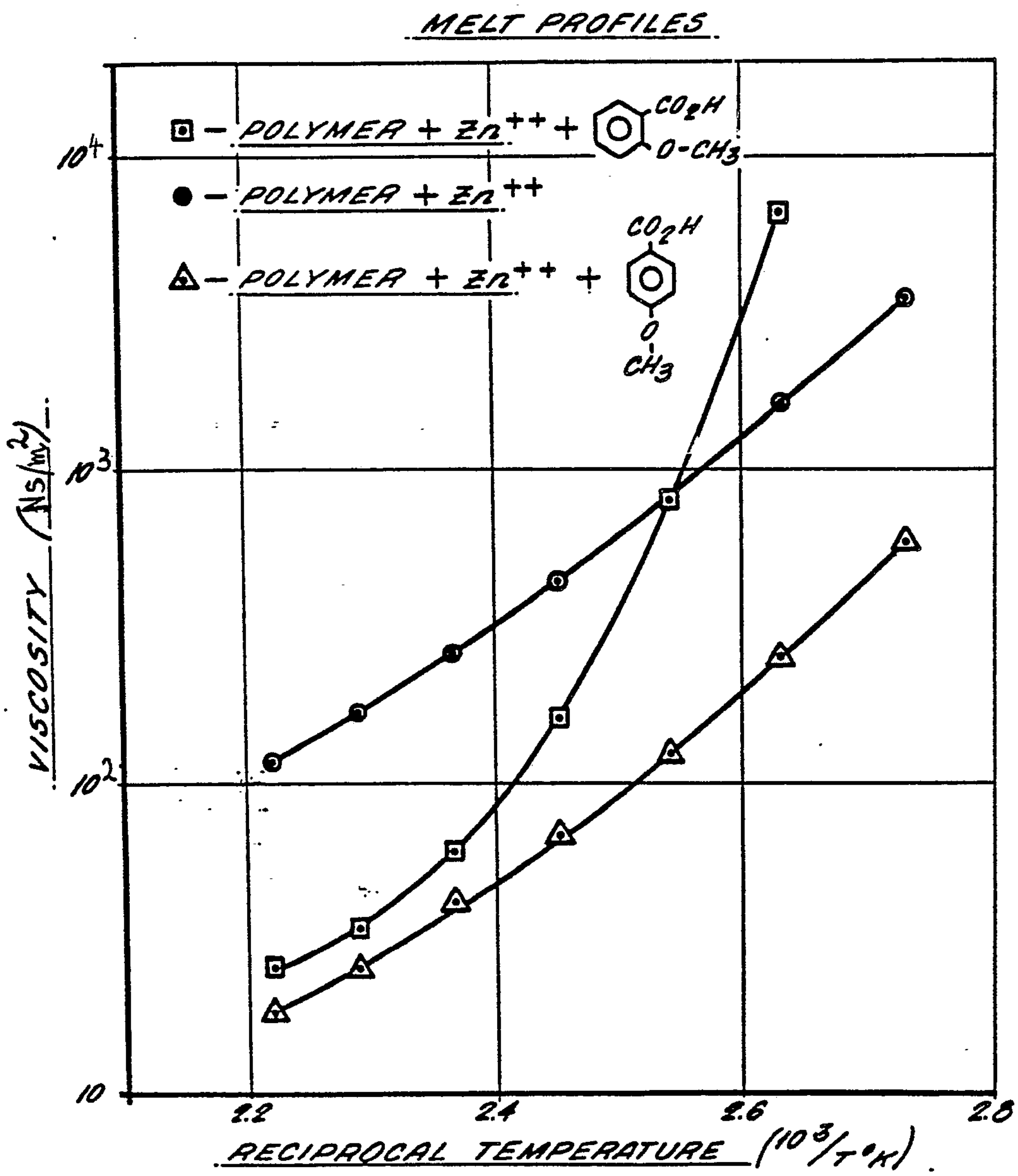
MELT PROFILES
POLYMER + Zn++ +
CO2H
O-CH3
POLYMER + Zn++
CO2H
POLYMER + Zn++ +
O
CH3
VISCOSITY (Ns/m2)
10^4
10^3
10^2
10
2.2
2.4
2.6
2.8
RECIPROCAL TEMPERATURE (10^3/T°K)